# EUROPEAN PATENT APPLICATION

(11) **EP 4 835 665 A1**
(43) Date of publication of application: **04.11.2026**
(21) Application number: 25173882.9
(22) Date of filing: 01.05.2025
(51) Int. Cl.: G06F 9/50, G06F 8/41, G06Q 10/0633, G06N 3/10

(54) **GRAPH-BASED TASK DATA GENERATION**

(71) Applicant: ARM Limited, Cambridge CB1 9NJ (GB)
(72) Inventor: CHEN, Siyuan, Cambridge, CB1 9NJ (GB)
(74) Representative: EIP

(57) **Abstract**

A computer-implemented method obtains graph data representing a directed graph of operations and obtains base subgraphs from the graph data. Each base subgraph comprises at least one operation and is associated with a subgraph space defined by dimensions to be iterated over during execution. The base subgraphs include a producer subgraph with a producer operation that generates an output, and a consumer subgraph with a consumer operation that consumes the output. The method chains the consumer subgraph to the end of the producer subgraph by merging their respective subgraph spaces to obtain a chain space. The method then generates task data describing a task to be executed in the form of a further directed graph of operations representing at least part of the original directed graph and comprising a chain of operations based on the chain of base subgraphs.

## Description

### Technical Field

The present disclosure relates to methods, systems, processors, and non-transitory computer-readable storage media for handling data for processing by a plurality of operations, such as neural network processing operations and graphics processing operations.

### Background

Computational graphs are mathematical structures used to represent and organize sequences of operations in various computational systems. These directed graphs consist of nodes representing operations and edges representing the flow of data between operations. In computational graphs, each node performs specific functions or transformations on input data and produces output that may serve as input to subsequent operations. This approach to modeling computational processes has found applications in numerous domains including machine learning frameworks, compiler optimizations, parallel computing systems, and data processing pipelines. The structure of these graphs allows for visualization, analysis, and optimization of complex computational tasks by breaking them down into discrete, interconnected operations with well-defined inputs and outputs.

Processing operations in computational graphs presents several technical challenges that affect system performance and efficiency. When executing complex graph operations, computational overhead can accumulate as data moves through multiple nodes, particularly when the graph contains numerous small operations. Performance bottlenecks often occur at points where data must be transferred between different memory spaces or processing units, creating latency that degrades overall system performance. Additionally, inefficient data flow between operations can lead to unnecessary data copies, redundant computations, or suboptimal memory access patterns. These inefficiencies become more pronounced as the size and complexity of the graph increase, affecting both execution time and resource utilization. The scheduling of operations also presents challenges, as determining the optimal order of execution while respecting dependencies requires sophisticated algorithms.

Maintaining consistency across operations in computational graphs presents another set of technical challenges. As data flows through a chain of operations, each operation may have specific requirements regarding its inputs and outputs. Mismatches in these requirements can lead to execution errors or incorrect results. Managing these constraints becomes particularly complex in graphs with dynamic shapes or conditional execution paths. The transformation of data between different formats often requires additional operations which can introduce overhead if not handled efficiently. Furthermore, tracking and validating consistency throughout the graph requires additional computational resources and can complicate the graph optimization process. These consistency issues become more pronounced in applications such as tensor computations, image processing, and numerical simulations where precise handling of data is necessary.

Conventional approaches to graph optimization include memory optimization strategies that minimize data movement. Operation scheduling algorithms attempt to determine execution orders that maximize resource utilization while respecting dependencies between nodes. However, these approaches often operate with limited information about the data flow patterns across the entire graph, leading to locally optimal but globally suboptimal solutions. Traditional methods may struggle with complex dependency structures, particularly in graphs with control flow or dynamic behavior. Additionally, many existing optimization techniques focus on specific aspects of graph processing, such as computational efficiency or memory usage, without considering the interplay between these factors. This compartmentalized approach to optimization can miss opportunities for more comprehensive improvements that address multiple aspects of graph processing simultaneously.

### Summary

A computer-implemented method includes obtaining graph data representing a directed graph of operations and obtaining a plurality of base subgraphs based on the graph data. Each base subgraph comprises at least one operation of the directed graph of operations and is associated with a respective subgraph space defined by at least one dimension to be iterated over to execute the respective subgraph. The plurality of base subgraphs includes a producer subgraph comprising a producer operation for generation of an output, and a consumer subgraph comprising a consumer operation for consumption of the output. The method includes chaining the consumer subgraph to an end of the producer subgraph to generate a chain of base subgraphs. The chaining includes merging a consumer subgraph space associated with the consumer subgraph with a producer subgraph space associated with the producer subgraph to obtain a chain space associated with the chain of base subgraphs. The method further includes generating task data that describes a task to be executed in the form of a further directed graph of operations representative of at least part of the directed graph of operations and comprising a chain of operations based on the chain of base subgraphs.

A processor may be configured to perform the method described above.

A system may include the processor described above and an offload processor. The offload processor may comprise a command processing unit connected to a processing module. The processing module may comprise a storage with a plurality of storage elements and a plurality of execution units. The processor may be configured to issue the task data to the command processing unit.

A non-transitory computer-readable storage medium may comprise a set of computer-readable instructions stored thereon which, when executed by at least one processor, are arranged to cause the at least one processor to perform the method described above.

### Brief Description of the Figures

Examples of the present disclosure will now be described with reference to the accompanying drawings:
Figure 1 is a flow diagram illustrating a computer-implemented method for processing a directed graph of operations and generating task data;
Figure 2 is a block diagram illustrating a directed graph of operations;
Figure 3 is a block diagram illustrating a producer subgraph and a consumer subgraph that form the directed graph shown in Figure 2;
Figure 4 is a block diagram illustrating a chain formed by combining the producer subgraph and the consumer subgraph shown in Figure 3;
Figure 5 is a block diagram showing a system for generating chains of operations;
Figure 6 is a block diagram illustrating an initial merge process between a producer subgraph and a consumer subgraph to form a chain;
Figure 7 is a block diagram illustrating a rewrite process for handling many-to-one input/output relationships when merging a producer subgraph and a consumer subgraph;
Figure 8 is a block diagram illustrating a rewrite process to achieve production coherence when merging a producer subgraph and a consumer subgraph;
Figure 9 is a block diagram illustrating a rewrite process to achieve consumption coherence when merging a producer subgraph and a consumer subgraph;
Figure 10 is a block diagram illustrating a rewrite process comprising the formation of a logical pipe;
Figure 11 is a block diagram illustrating a rewrite process that consolidates identical operations and/or logical pipes;
Figure 12 is a block diagram illustrating a rewrite process that removes redundant logical pipes;
Figure 13 is a block diagram illustrating a rewrite process that removes a redundant operation from a chain;
Figure 14 is a block diagram illustrating a rewrite process that removes an unused dimension from a chain space;
Figure 15 is a block diagram illustrating a rewrite process of chain with vector engine operations;
Figure 16 is a block diagram illustrating a data processing system;
Figure 17 is a block diagram illustrating a neural engine; and
Figure 18 is a block diagram illustrating a system for allocating handling data.

### Detailed Description

### Processing a Directed Graph of Operations

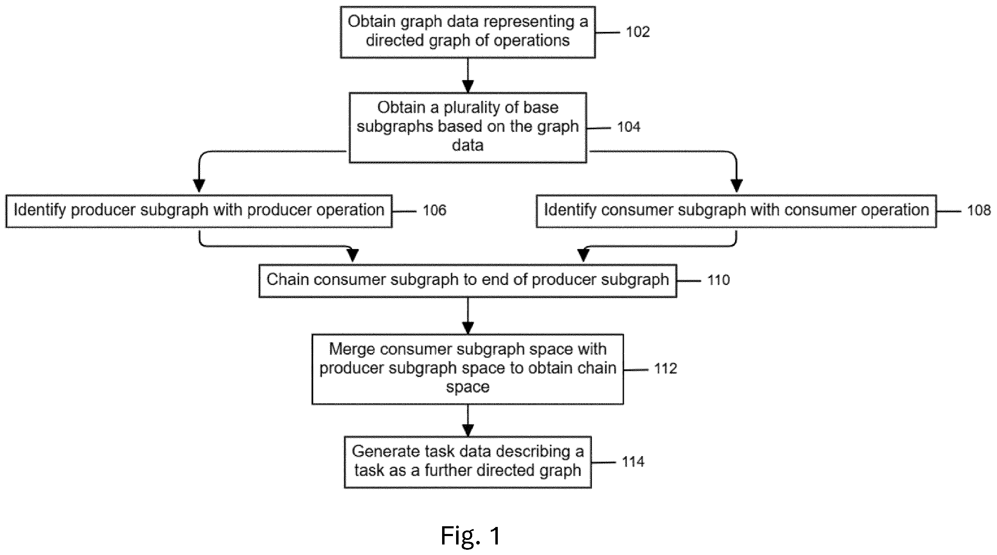

Figure 1 illustrates a flow diagram of a computer-implemented method for processing a directed graph of operations and generating task data based on the directed graph of operations. The method begins at block 102, where graph data representing the directed graph of operations is obtained. The graph data may represent computational operations to be performed, such as neural network operations, matrix computations, or other computational tasks.

At block 104, a plurality of base subgraphs is obtained based on the graph data. Each base subgraph comprises at least one operation of the directed graph of operations. Additionally, each base subgraph is associated with a respective subgraph space defined by at least one dimension to be iterated over to execute the respective subgraph. The subgraph space represents the dimensional boundaries within which the operations of the subgraph are to be executed.

The method proceeds to block 106, where a producer subgraph is identified among the plurality of base subgraphs. The producer subgraph comprises a producer operation of the directed graph of operations, which is responsible for generating an output. The producer subgraph has an associated producer subgraph space that defines the dimensional boundaries for executing the producer operation.

At block 108, a consumer subgraph is identified among the plurality of base subgraphs. The consumer subgraph comprises a consumer operation of the directed graph of operations, which consumes the output generated by the producer operation. The consumer subgraph has an associated consumer subgraph space that defines the dimensional boundaries for executing the consumer operation. Although blocks 106 and 108 are shown at the same level within the method of Figure 1, it is to be appreciated that they may be performed at least partly concurrently, fully concurrently or asynchronously, e.g. with block 106 performed before block 108 or vice versa.

The method continues at block 110, where the consumer subgraph is chained to an end of the producer subgraph to generate a chain of base subgraphs. This chaining process creates a sequence of operations that can be executed together as a unified task.

At block 112, as part of the chaining process, the consumer subgraph space associated with the consumer subgraph is merged with the producer subgraph space associated with the producer subgraph. This merging results in obtaining a chain space associated with the chain of base subgraphs. The chain space represents the combined dimensional boundaries within which the operations of both subgraphs are to be executed.

Blocks 106 to 112 may be performed repeatedly to merge additional subgraphs and/or chain(s) of base subgraphs with the chain of base subgraphs to iteratively update the chain of base subgraphs. This enables the generation of at least one chain of base subgraphs based on the chain of base subgraphs and representing the directed graph of operations (or a part thereof). In such cases, it is to be appreciated that the producer and/or consumer subgraphs identified at blocks 106 and 108 in subsequent iterations (e.g. after an initial iteration of blocks 106 to 112) may be base subgraphs or may be more complex subgraphs, for example a chain of base subgraphs obtained by merging two subgraphs, a subgraph and a chain, or two chains in a prior iteration of blocks 106 to 112.

At block 114, task data is generated that describes a task to be executed. The task data is in the form of a further directed graph of operations that is representative of at least part of the original directed graph of operations. This further directed graph comprises a chain of operations based on the chain of base subgraphs created in the previous steps. The task data can then be used by a processing system, such as a graph processor, to execute the task efficiently.

The method illustrated in Figure 1 enables efficient processing of complex computational graphs by identifying and chaining together operations that have producer-consumer relationships. By merging producer and consumer subgraph spaces, the method creates optimized task representations that can be executed more efficiently than if the operations were processed individually.

The approach of merging subgraph spaces with different dimensionalities creates a unified chain space, which may be referred to herein as a chain space, which allows complex operations to be executed as a single task. This eliminates the need to process operations separately, which would require additional computational resources and time. The unified chain space provides a comprehensive dimensional framework that encompasses all operations in the chain, enabling more efficient execution of complex computational graphs.

By retaining the consumer and producer subgraph spaces of both the consumer and producer subgraphs during the merging process, dimensional information is preserved that would otherwise be lost in traditional transform propagation approaches. This preservation occurs without relying on operation-specific input/output transforms to propagate dimensional data. The complete dimensional information supports more complex operation spaces than previous methods that relied on relative transformations between spaces associated with different operations (also referred to herein as sections).

The described method eliminates the need for a primary operation concept that was central to previous approaches, making the system more adaptable across different architectures. This architecture-agnostic approach allows the same chaining methodology to be applied regardless of the underlying computational framework. The flexibility enables architecture-specific optimizations to be implemented while maintaining a consistent approach to operation chaining and space merging.

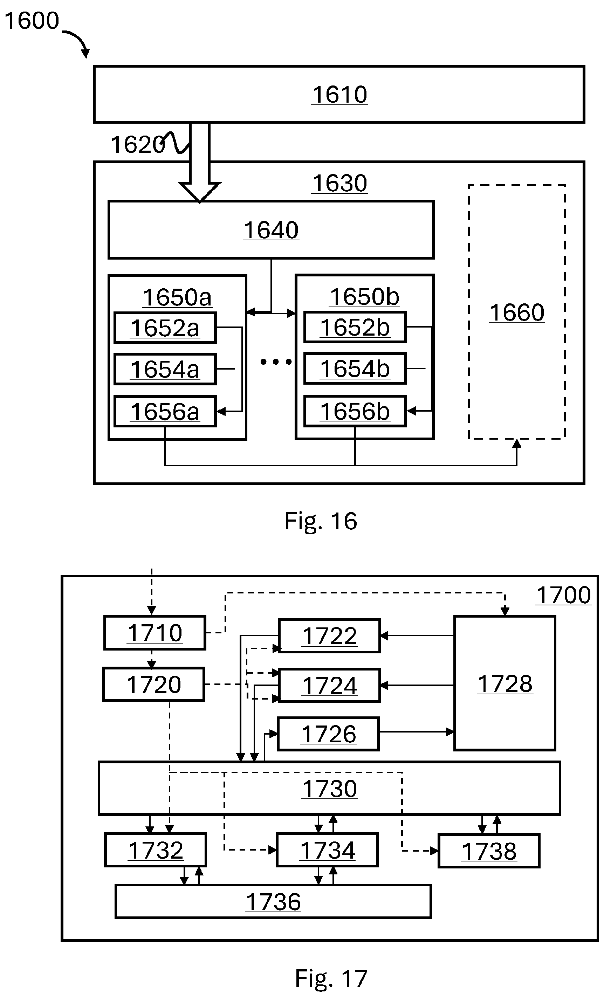

The methods herein, such as those in accordance with Figure 1, can be used to obtain task data for a graph processor operable to execute the further directed graph of operations. For example, the approaches herein may be used to compile graphs for execution on a graph processor configured to operate on graphs of this form. Such a graph processor may be or comprise a neural engine and/or a neural processing unit, as described further below with reference to Figures 16 to 18.

### Directed Graph Structure for Operational Processing

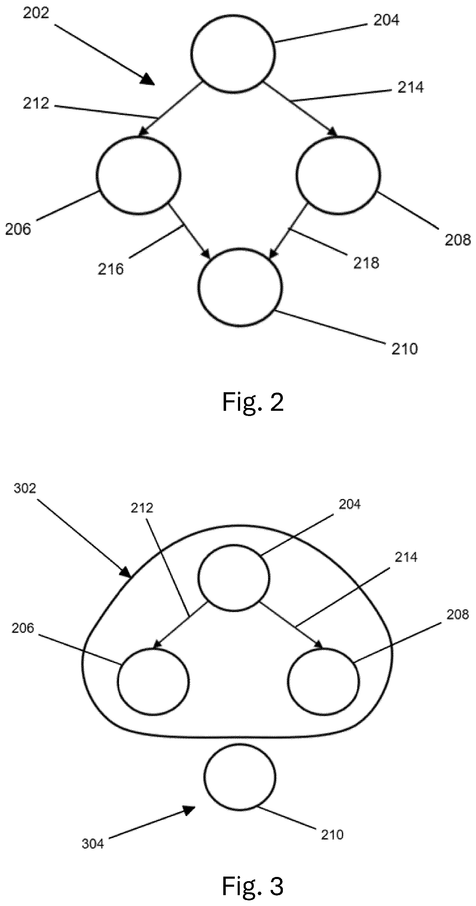

Figure 2 illustrates a directed graph 202 that may be used in a processing system to represent operations and connections between operations. The directed graph 202 is a directed acyclic graph. Each connection corresponds to a different respective logical pipe, for transferring data between the operations connected by the connection. The directed graph 202 includes a first operation 204, a second operation 206, a third operation 208, and a fourth operation 210. The first operation 204 is connected to the second and third operations 206, 208 by first and second connections 212, 214, respectively. The second and third operations 206, 208 are connected to the fourth operation 210 by third and fourth connections 216, 218, respectively.

The directed graph 202 represents a computational flow where data progresses through a series of operations. Each operation in the directed graph 202 may represent a particular computational function, such as a neural network operation. The operations are arranged in a specific sequence to perform a desired computational task.

The first operation 204 may be configured to process input data and generate an output. This output is then transmitted via the first and second connections 212, 214 to the second and third operations 206, 208, respectively. The second operation 206 processes the data received from the first operation 204 and transmits its output via the third connection 216 to the fourth operation 210. Similarly, the third operation 208 processes data received from the first operation 204 and transmits its output via the fourth connection 218 to the fourth operation 210. The fourth operation 210 processes data received from the second and third operations 206, 208 and produces a final output.

Each operation in the directed graph 202 may have specific operational characteristics, such as dimensionality requirements, transformation rules, or reduction properties. These characteristics influence how the operations can be combined or chained together for execution by a particular processor, such as a neural engine.

The connections 212, 214, 216, and 218 represent data flow between the operations, and correspond to a logical pipe, which may be mapped to a particular storage element of a processor to execute the task by the processor. Each connection may carry tensor data with specific dimensional properties. The dimensional properties of the data flowing through these connections must be compatible with the input requirements of the receiving operation.

The directed graph 202 can be analyzed to identify sequences of operations that can be efficiently executed together. This process, known as chaining, involves determining which operations can be merged into a single task descriptor, represented by task data, which describes the task to be executed in the form of a further directed graph of operations. In the context of neural engine processing, the task data may be in the form of Neural Engine Descriptor (NED) for execution on a neural engine architecture.

The directed graph 202 serves as the foundation for analyzing operation dependencies and determining optimal execution strategies. By examining the relationships between operations and the properties of the connections between them, a processing system can identify opportunities for optimization through operation chaining.

When analyzing the directed graph 202 for chaining opportunities, the system considers various factors including the dimensional compatibility between operations, the transformation requirements at connection points, and the hardware constraints of the target architecture for execution of a task represented by the directed graph 202. This analysis helps determine which sequences of operations can be efficiently executed together without introducing functional errors or performance degradation.

### Partitioning Directed Graphs into Operational Subgraphs

Figure 3 illustrates features that relate to the directed graph shown in Figure 2. In particular, Figure 3 shows how the directed graph 202 can be partitioned into subgraphs for the purpose of chaining operations together.

As shown in Figure 3, the directed graph 202 is divided into a producer subgraph 302 and a consumer subgraph 304. The producer subgraph 302 includes the first operation 204, the second operation 206, and the third operation 208 from Figure 2. The consumer subgraph 304 includes the fourth operation 210 from Figure 2.

The producer subgraph 302 represents a sequence of operations that collectively produce data that is consumed by the consumer subgraph 304. Within the producer subgraph 302, the first operation 204 processes input data and passes its output to the second and third operations 206, 208 via the first and second connections 212, 214, which correspond to first and second logical pipes, respectively. The second and third operations 206, 208, are each examples of a respective producer operation, and generate output data that is ultimately provided to the consumer subgraph 304. In other examples, a producer subgraph may have a single producer operation that provides a single output to a consumer subgraph such as the consumer subgraph 304.

The consumer subgraph 304 contains the fourth operation 210, which is an example of a consumer operation. The fourth operation 210 consumes the data produced by the producer subgraph 302, specifically the outputs from the second and third operations 206, 208, and performs further processing on this data.

The partitioning of the directed graph 202 into the producer subgraph 302 and the consumer subgraph 304 facilitates the process of chaining operations together. By identifying distinct producer and consumer subgraphs, a processing system can determine how to efficiently combine multiple operations into a single set of task data, such as a single Neural Engine Descriptor (NED), for execution on a neural engine architecture. The producer and consumer subgraphs may be base subgraphs generated based on graph data representing a directed graph of operations, such as the directed graph 202 or may be subgraphs comprising at least two base subgraphs which have e.g. been merged into a chain in a prior merging process. Each base subgraph comprises at least one operation of the original directed graph, and is associated with a respective subgraph space.

The relationship between the producer subgraph 302 and the consumer subgraph 304 is important for determining how to merge these subgraphs into a chain. The system analyzes the dimensional compatibility, transformation requirements, and hardware constraints to determine if the producer and consumer subgraphs can be efficiently combined. If compatible, the system can merge the subgraphs into a single chain, which can lead to more efficient execution on a processor, such as a neural engine, by reducing memory transfers and optimizing computational resources.

The system may also allow different angles of merging to merge the subgraphs into a chain, which can be beneficial. For example, to obtain a chain of merged subgraphs formed of the first to fourth operations 204-210, there can be different angles of merging, such as merging a subgraph of the first to third operations 204-208 with a subgraph of the fourth operation 210 or instead merging a subgraph of the first, second and fourth operations 204, 206, 210 with a subgraph of the third operation 208. However, merging a subgraph of the first, second and fourth operations 204, 206, 210 with a subgraph of the third operation 208 will be rejected as there is no clear consumer subgraph and producer subgraph.

Using multiple angles of merging allows the system to be able to handle a large variety of graph structures by enabling at least one angle in which a clear consumer subgraph and producer subgraph to be identified. The rest of the merging can then rely on the properties of the consumer-producer relationship to ensure correct data dependencies.

### Chaining Operational Subgraphs

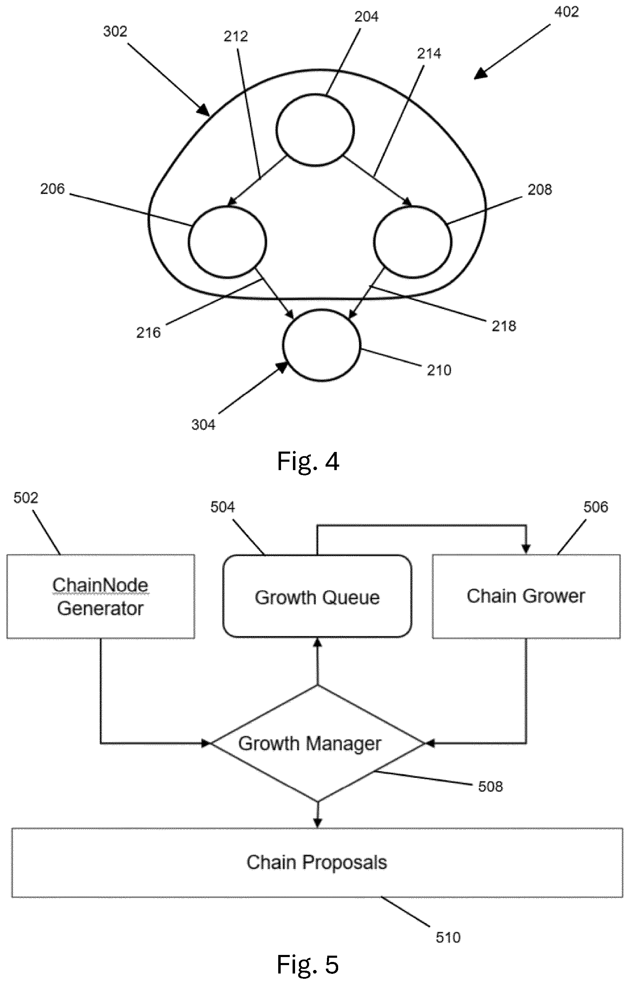

Figure 4 illustrates features that relate to the producer and consumer subgraphs shown in Figure 3. In particular, Figure 4 shows how the producer subgraph 302 and consumer subgraph 304 can be combined to form a chain 402 of base subgraphs.

The chain 402 represents the result of a chaining process where the producer subgraph 302 and consumer subgraph 304 are merged into a single chain of base subgraphs. The chain may be executing more efficiently than executing each of the base subgraphs separately, for example by reducing memory transfers between operations and optimizing computational resource usage on a particular architecture.

Within the chain 402, the first connection 212 links the first operation 204 to the second operation 206, while the second connection 214 connects the first operation 204 to the second operation 206. The second operation 206 and the third operation 208 from the producer subgraph 302 are connected to the fourth operation 210 from the consumer subgraph 304 by the third and fourth connections 216, 218, respectively. These connections correspond to logical pipes that facilitate data transfer between operations within the producer and consumer subgraphs 302, 304.

By forming the chain 402, the system can generate task data, such as a single Neural Engine Descriptor (NED), that encompasses all four operations. This allows a processor, such as a neural engine, to execute the entire sequence of operations as a cohesive unit, maintaining data locality and reducing overhead associated with transferring intermediate results between separate operations. The chaining process considers factors such as dimensional compatibility between operations, transformation requirements, and hardware constraints to ensure that the resulting chain can be efficiently executed on the target neural engine architecture.

### System for Generating Chains of Neural Engine Operations

Figure 5 illustrates a system for generating chains of operations for a neural engine. The system includes a base subgraph generator 502, a growth queue 504, a chain grower 506, a growth manager 508, and chain proposals 510.

The base subgraph generator 502 is configured to generate a plurality of base subgraphs that each comprise at least one operation of a directed graph of operations for which at least one chain of subgraphs is to be generated. A base subgraph may be referred to as a ChainNode. Each base subgraph represents a functionally correct realization of one or more operations that can be performed by a processor. For example, a given base subgraph may be the smallest functionally correct realization of a particular operation. Each base subgraph may begin with an input operation, end with an output operation and comprise at least one operation of the directed graph between the input and output operations.

A base subgraph may contain a single operation but some base subgraphs may contain a plurality of operations. For example, the base subgraph generator 502 may implement several features including identification of whether two operations must or should be chained together and bespoke kernel generation e.g. to generate a particular bespoke chain of operations, or operation, for example corresponding to a particular optimized realization of at least one operation. Each ChainNode is fully realized at the base subgraph generator 502 stage, with its subgraph space and constituent operation-specific local space transforms defined, so that each base subgraph is associated with a respective subgraph space. This includes all input operations (referred to herein as input reader, IR, operations) and output operations (referred to herein as output writer, OW, operations) within the ChainNode, and multiple operations if necessary to achieve the functionality of the subgraph. The set of base subgraphs generated by the base subgraph generator 502 for example constitutes the simplest and functionally correct realization of the whole directed graph upon which the base subgraphs are based. The approach herein aims to make chain growing operation-agnostic, and instead rely on architectural constraints and automatically-evaluated feasibility of transforms to propose new chains. The base subgraphs are for example the smallest functionally correct chains that are not intended to be searched at a finer granularity.

There may be more efficient realizations for a sequence of operations than the simple concatenation of realizations of each member of the sequence, for example for cases where the optimized sequence cannot be expressed in TOSA (Tensor Operator Set Architecture), but can be performed by the hardware. The feature of bespoke kernel generation performs an operation sequence pattern recognition and directly generates a chain proposal with the optimized realization. Each optimized kernel is generated as a single ChainNode, i.e. a single base subgraph. This means that the subsequent search granularity will not go finer than this optimized kernel, greatly reducing the search space. In some cases, each operation in the sequence can still form a ChainNode (i.e. base subgraph), and the optimized kernel is added as an additional chain proposal (i.e. as an additional base subgraph). This allows the solution space to be fully explored for the best chains, but also creates a much larger search space, leading to greater compilation time. In some cases, at least one bespoke subgraph may be generated manually (or via a different system than the bespoke kernel generator of the base subgraph generator 502). Whereas respective subgraphs are chained together in an acyclic manner, individual base subgraphs need not be internally acyclic. For example, a particular base subgraph, such as a bespoke base subgraph, may include at least one loop or other cyclic feature, e.g. provided that the base subgraph can be chained to other base subgraphs in a directed acyclic manner.

The base subgraph generator 502 also implements a feature to finalize transforms associated with respective base subgraph, e.g. to transform between an operation-specific local space of a given operation of a base subgraph and a subgraph space for the base subgraph. In addition, for each base subgraph, the base subgraph generator 502 generates a ChainNode realization that includes space transforms for respective operations of the ChainNode defined relative to the ChainNode's operation space, which may be referred to interchangeably herein as a subgraph space for that ChainNode.

For example, with newer architectures, it is more difficult for certain operations to properly define transforms at the base subgraph level, at which stage an execution space for execution of the task defined by the directed graph may not be defined. To address this, in examples herein, transformations to achieve functionality at the base subgraph level are defined before more complex chaining occurs. This for example involves generating a ChainNode realization that includes mapping a given base subgraph to multiple sections, i.e. operations, and setting up of IR & OW operations, so that appropriate transforms for IR & OW operations can be manually defined for more bespoke realizations. Realizations for particular base subgraphs can be merged together subsequently at the chain grower 506 stage. Every section, i.e. operation, and logical pipe's transform is defined relative to the ChainNode's operation space, i.e. relative to a subgraph space for the base subgraph corresponding to that ChainNode. This avoids a reliance on relative transformations between sections and pipes.

As part of realization, transform program data defining the respective transforms between the subgraph space for a particular base subgraph and the operation-specific local space of respective operations of the particular base subgraph may be generated for respective base subgraphs, to ensure that the respective base subgraphs are properly realizable for the given architecture. This may involve checking that various criteria are satisfied, such as whether there is sufficient space available for storing the transform program data and an availability of a sequence of instructions selected from a transform instruction set for a particular transform program represented by the transform program data. It may be required that all base subgraphs have legal realizations. If a given base subgraph does not meet this criterion, a manual realization for that base subgraph can be written using the bespoke kernels generator (not shown in Figure 5). Every base subgraph should be self-contained in its functional correctness, and the subsequent chain grower 506 may be designed to work based on this requirement.

The growth queue 504 maintains a list of all the base subgraphs which can be chained together. The growth queue 504 serves as a thread-safe queue for chain operations and next nodes to be appended, allowing multiple threads of the chain grower 506 to performing chaining operations concurrently.

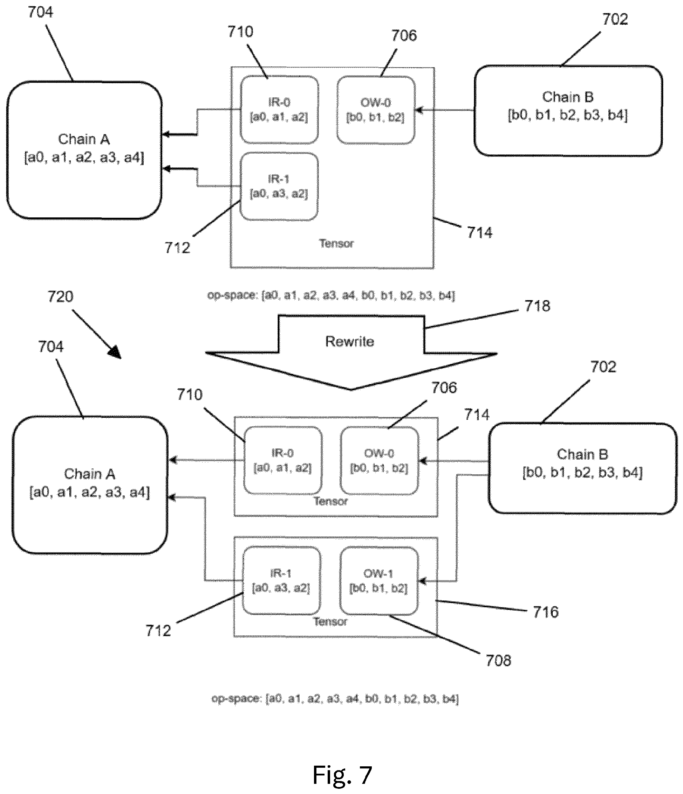

The chain grower 506 is responsible for chaining base subgraphs together to form larger chains. The chain grower 506 performs several operations including checks to verify that chains can be merged, an initial merge operation to combine chains, functional rewrites to ensure coherent transforms between chains, optimization rewrites to improve the efficiency of merged chains, and validity checks to verify that the resulting chains meet architectural constraints. The functional and optimization rewrites are discussed further below with reference to Figures 7 to 15.

The check to verify that chains can be merged is for example a pre-merge check of the two chains (which may be e.g. two subgraphs, a subgraph and an existing chain, or two existing chains), to implement constraints and ensure certain assumptions hold. Constraints that are checked may include that one chain is a consumer of another chain and/or to that both chains act on the same data, such as the same tensor slice of a given tensor.

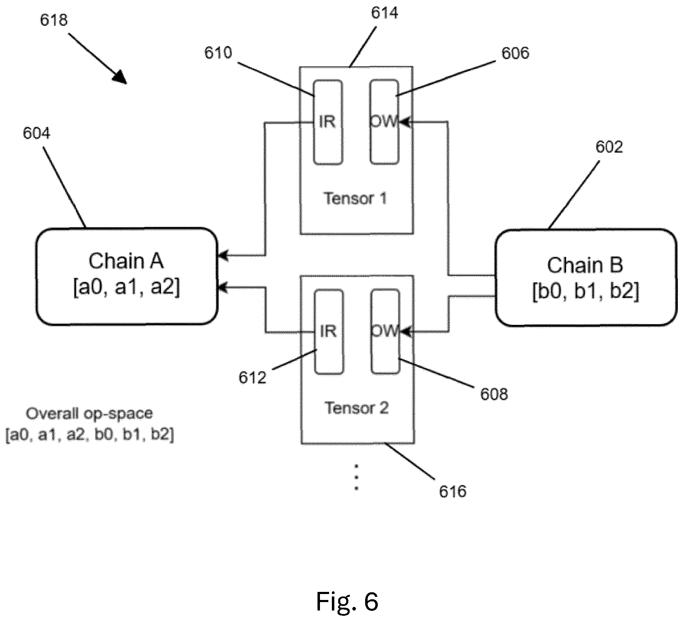

The aim of the initial merge operation, an example of which is shown in Figure 6, is to perform the simplest possible functionally-correct merge of the two chains, ignoring architectural constraints and performance. This can be done by nesting the producer subgraph space of the producer subgraph inside the consumer subgraph space of the consumer subgraph. With the producer subgraph denoted as B and the consumer subgraph denoted as A, this preserves all OW-IR connections, all pipes and operations in B are iterated over by the number of dimensions in the consumer subgraph space of A, and the overall chain space of the merged chain (formed by merging A and B) can be denoted as [<op-space A>, <op-space B>], where op-space A is the consumer subgraph space and op-space B is the producer subgraph space. This means that in the resulting chain, all unresolved I/O (input/output) connections have the OW dimensions inwards with-respect-to the IR dimensions.

It is to be appreciated that the OW-IR connection is an abstract section which may be used to verify coherence of transforms at the interface between two chains. It tracks the production and consumption of a tensor, with a single OW and one or more IR involved. It has a virtual section space, i.e. operation-specific local space, of [<IR-dimensions>, <OW-dimensions>], which means that the entire tensor must be produced (recomputed) each time any IR tries to read any part of the tensor. This means (albeit in an inefficient way) that all IRs will always read correct data if this abstract section is managed by the processor just like any other section in its dependencies resolution.

In an example, if the initial merged is performed correctly, one complete traversal of op-space B occurs for every block issued in op-space A, where op-space A is the consumer subgraph space and op-space B is the producer subgraph space. This means that all intermediate tensors between B and A are always fully produced (recomputed) for each block increment in op-space A, and so sections (i.e. operations) in A (i.e. the consumer subgraph) execute on the same block of data as they would have in the original unmerged consumer subgraph.

Returning to the chain grower 506, the merging of two chains and ensuring coherent transforms and feasibility of realization is a complex task. In some examples, the chain grower 506 utilizes a merge and rewrite style process, starting with a simple initial merge of the two realizations within the growth queue 504, and then rewriting the (merged) realization progressively until no further changes are possible. When the rewrite process terminates, a final check of the legality of the realization view is performed. The merging of the chains for example ends when the growth queue 504 is emptied and nothing more is added.

The growth manager 508 coordinates the chaining process by managing the search direction and exploration angles for each possible chain. The growth manager 508 implements a bi-directional breadth-first traversal approach to explore potential chain combinations. Each possible chain may have multiple exploration angles, as discussed above with reference to Figure 3, allowing at least one valid angle to try merging with. The growth manager 508 may also perform a check to evaluate whether chains have growth potential based on architectural constraints. Chain proposals 510 represent the output of the chaining system, containing valid chains that have been successfully merged and optimized. These chain proposals can then be used to generate task data defining a task to be executed by a processor.

The system operates by first generating base subgraphs through the base subgraph generator 502, placing them in the growth queue 504, processing them through the chain grower 506 under the coordination of the growth manager 508, and finally producing optimized chain proposals 510 that satisfy all architectural constraints of the target processor.

Fixing and optimization of a merged chain (such as one of the chain proposals) can then be performed via at least one rewrite as discussed further below with reference to Figures 7 to 15. A rewrite is for example self-contained and may be performed while maintain the functional correctness and/or non-self-dependency of the chain post-rewrite.

### Merging Producer and Consumer Subgraphs Through Chaining

Figure 6 illustrates a block diagram showing a chaining process for merging a producer subgraph and a consumer subgraph, for example as performed during an initial merge process performed by the chain grower 506 of Figure 5. The diagram depicts the various components and their relationships.

The producer subgraph 602 has a producer subgraph space with dimensions [b0, b1, b2]. The producer subgraph 602 includes a first output operation 606 and a second output operation 608. These output operations are responsible for outputting output data from the producer subgraph 602. For example, an output operation may be associated with writing an output to an external storage, which may be external to an execution unit for executing an operation that generated the output.

The consumer subgraph 604 has a consumer subgraph space with dimensions [a0, a1, a2]. The consumer subgraph 604 includes a first input operation 610 and a second input operation 612. These input operations receive input data for processing within the consumer subgraph 604. For example, an input operation may be associated with obtaining an input from an external storage, which may be external to an execution unit for executing an operation that generated the output, such as reading the input from the external storage. The external storage to which the data is written by the first and/or second output operations 606, 608 is the same as the external storage from which the data is obtained by the first and/or second input operations 610, 612, respectively, in this example. However, in other examples, the data may be transferred from the external storage to a further external storage before being obtained from the further external storage by the first and/or second input operations 610, 612.

The first output operation 606 of the producer subgraph 602 generates a first tensor 614, which is provided as input to the first input operation 610 of the consumer subgraph 604. Similarly, the second output operation 608 of the producer subgraph 602 generates a second tensor 616, which is provided as input to the second input operation 612 of the consumer subgraph 604.

When the producer subgraph 602 and consumer subgraph 604 are merged to form a chain 618, the chain space of the resulting chain has dimensions [a0, a1, a2, b0, b1, b2]. This merged chain space combines the dimensions of both the consumer subgraph 604 and the producer subgraph 602, with the consumer dimensions positioned as outer dimensions relative to the producer dimensions.

In the merging process, the tensors connecting the producer subgraph 602 and consumer subgraph 604 become internal to the chain 618. Specifically, the first tensor 614 and second tensor 616 that were previously external connections between separate subgraphs become internal data paths within the unified chain 618. This internalization allows for more efficient data handling.

The arrangement of dimensions in the chain 618, where consumer dimensions are positioned as outer dimensions relative to producer dimensions, ensures that for each block iterated over in the consumer subgraph dimensions, the producer subgraph completes a full traversal of its dimensions. This guarantees that all intermediate tensors between the producer subgraph 602 and consumer subgraph 604 are fully produced for each block increment in the consumer subgraph space, maintaining functional correctness in the merged chain 618.

### Merging Subgraphs with a Many-to-One Input/Output Relationship

Figure 7 illustrates a method for merging a producer subgraph 702 and a consumer subgraph 704, involving a functional rewrite 718 of the chain. The producer subgraph 702 has a producer subgraph space with dimensions [b0, b1, b2, b3, b4], while the consumer subgraph 704 has space with dimensions [a0, a1, a2, a3, a4].

Prior to the functional rewrite 718, the producer subgraph 702 includes a first output operation 706. The first output operation 706 is associated with a first output subgraph space with dimensions [b0, b1, b2], and the second output operation 708 is associated with a second output subgraph space with dimensions [b0, b1, b2]. The consumer subgraph 704 includes a first input operation 710 associated with a first input subgraph space with dimensions [a0, a1, a2] and a second input operation 712 associated with a first input subgraph space with dimensions [a0, a3, a2].

Prior to merging the subgraphs, the system identifies that a production output of the first output operation 706 of the producer subgraph 702 is to be provided to both the first input operation 710 and the second input operation 712 of the consumer subgraph 704. This creates a many-to-one input/output relationship that requires special handling during the merging process. The production output is for example the data that is written to storage by the first output operation 706.

A rewrite process 718 is performed to handle this many-to-one relationship, which may be considered to form part of the merging of the producer and consume subgraphs 702, 704. During this rewrite process, the system generates a second output operation 708 as a duplicate of the first output operation 706, with a second output subgraph space with dimensions [b0, b1, b2]. The second output operation 708 is associated with a duplicate of the production output. The rewrite process 718 ensures that the production output is provided to the first input operation 710 and the duplicate of the production output is provided to the second input operation 712, by merging the producer and consumer subgraphs 702, 704.

Prior to the rewrite process 718, the production output transferred from the producer subgraph 702 to the consumer subgraph 704 is represented by a first tensor 714, which is output by the first output operation 706 and is input to the first and second input operations 710, 712. After the rewrite process 718, the first tensor 714 is output by the first output operation 706 and is input to the first input operation 710, and there is a second tensor 716 representing the duplicate of the production output, which is output by the second output operation 708 and input to the second input operation 712.

After the rewrite process 718, a chain 720 is formed with a combined chain space that includes dimensions from both the producer and consumer subgraphs 702, 704: [a0, a1, a2, a3, a4, b0, b1, b2, b3, b4]. This merged chain maintains the functional correctness of the original separate subgraphs while enabling more efficient execution by the neural engine.

The rewrite process 718 is particularly important when dealing with situations where a single output from one subgraph needs to be consumed by multiple inputs in another subgraph. Without this rewrite step, the merging process might result in incorrect data flow or computational results. By creating a duplicate of the output operation and its associated production output, which is for example written or otherwise output to storage by the output operation, this approach ensures that each input operation in the consumer subgraph receives the correct data while maintaining the overall computational integrity.

The duplication of output operations and their associated outputs enables a single producer to feed multiple consumers without breaking the chain. This approach preserves the performance benefits that come from chaining operations together while simultaneously supporting complex graph topologies with branch patterns. By creating duplicates of the output operation and its associated production output, the system can maintain direct connections between the producer and multiple consumer operations, ensuring data flows correctly to all required destinations while retaining the computational efficiency gained through merged execution chains.

For one-to-many relationships, a different approach may be taken. In these cases, multiple outputs of the producer subgraph are used as a single input to the consumer subgraph. In examples, chaining of the consumer subgraph to the producer subgraph may be forbidden and an attempt to perform such chaining may therefore fail. Such cases may involve identifying that a first and second production output of a further output operation of a further producer subgraph of the plurality of base subgraphs are to be provided to a further input operation of a further consumer subgraph of the plurality of base subgraphs and, in response, ceasing chaining of the further consumer subgraph to an end of the further producer subgraph.

### Merging Producer and Consumer Subgraphs to Achieve Production Coherence

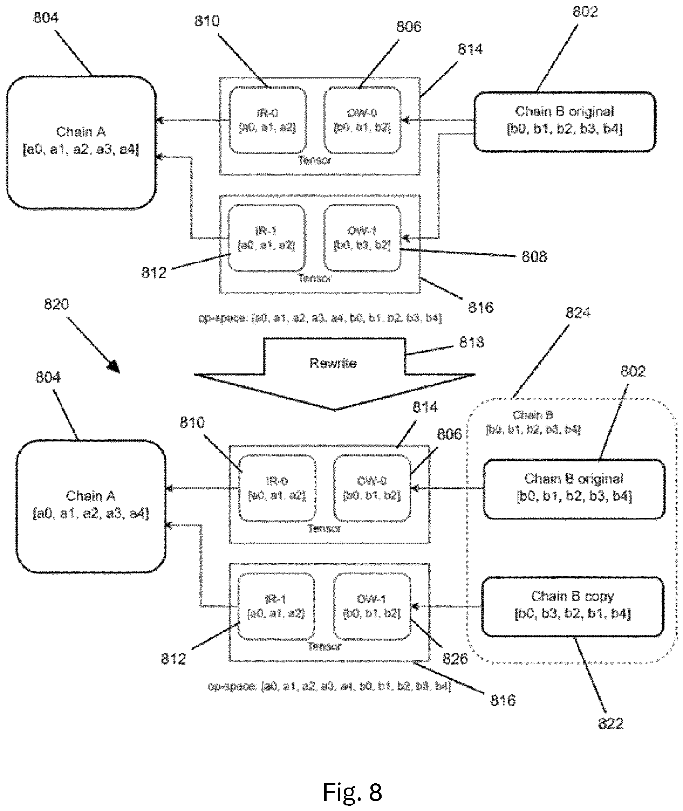

Figure 8 illustrates a process for merging a producer subgraph 802 and a consumer subgraph 804. The Figure shows how a rewrite process 818 can be performed, e.g. as part of the merging of the producer and consumer subgraphs 802, 804, to handle situations where an output operation of a producer subgraph provides data to multiple input operations in a consumer subgraph.

The producer subgraph 802 of Figure 8 has a producer subgraph space with dimensions [b0, b1, b2, b3, b4], while the consumer subgraph 804 has a consumer subgraph space with dimensions [a0, a1, a2, a3, a4]. Within the producer subgraph 802, there is a first output operation 806 and a second output operation 808, associated with first and second output operation spaces each having dimensions [b0, b1, b2]. The consumer subgraph 804 contains a first input operation 810 and a second input operation 812, associated with first and second input operation spaces each having dimensions [a0, a1, a2].

During the process of merging these subgraphs, it is identified that the first tensor 814 output by the first output operation 806 is to be provided to the first input operation 810, as an input to the consumer subgraph 804, and the second tensor 816 output by the second output operation 808 is to be provided to the second input operation 812, as a further input to the consumer subgraph 804. The system performs a rewrite 818 to ensure production coherence between the subgraphs. For example, merging of the producer and consumer subgraphs 802, 804 may comprise merging the consumer subgraph space and the producer subgraph space such that each dimension of the consumer subgraph space uniquely maps to a corresponding dimension of the producer subgraph space. In Figure 8, the rewrite 818 is used to achieve a unique mapping between dimensions in the consumer subgraph 804, involved in the OW-IR interface, and dimensions in the producer subgraph 802. The rewrite 818 of this example involves duplication of base subgraphs, which may create base subgraphs that are unnecessary. Redundancy can be addressed at a later stage, for example by the optimization rewrites discussed further below.

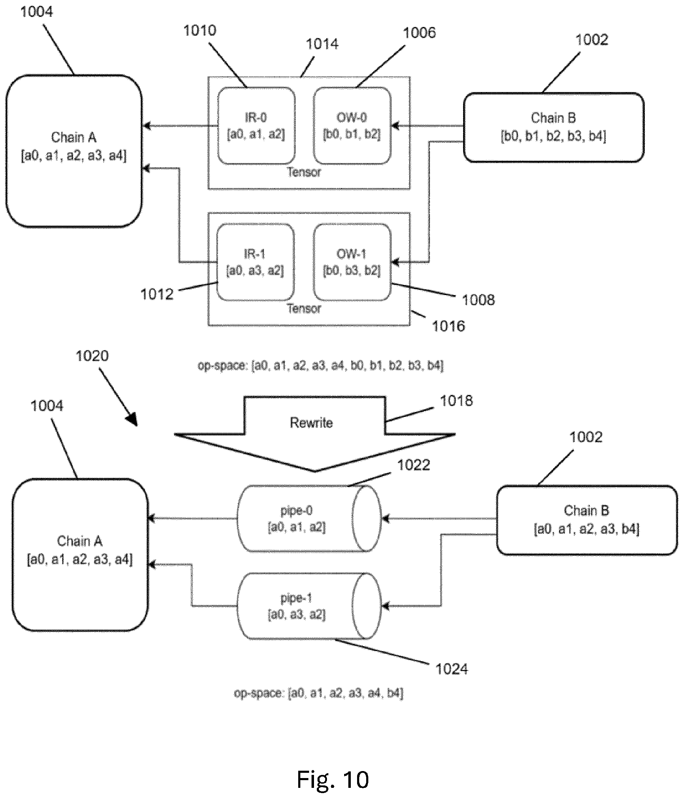

In the example of Figure 8, a single dimension of the consumer subgraph space is mapped to multiple dimensions of the producer subgraph space prior to the rewrite 818 (as the second dimension, a1, of the first and second input operations 810, 812 is mapped to two different second dimensions, b1, b3, of the first and second output operations 806, 808). In this case, prior to merging, it is identified that a given dimension of the consumer subgraph 804 maps to a plurality of dimensions of the producer subgraph space. To achieve production coherence, the rewrite 818 involves generating a duplicate of the producer subgraph 822 and generating an updated producer subgraph 824 comprising the (original) producer subgraph 802 and the duplicate of the producer subgraph 822, which has a duplicate of the producer subgraph space. At least one dimension of the duplicate of the producer subgraph space is permutated such that the given dimension of the consumer subgraph space uniquely maps to a particular dimension of the updated producer subgraph 824. In this case, the dimensions of the duplicate of the producer subgraph 822 are rearranged from [b0, b1, b2, b3, b4] to [b0, b3, b2, b1, b4], so that the duplicate of the producer subgraph space is defined as [b0, b3, b2, b1, b4] after permutating dimensions of the duplicate of the producer subgraph space. This approach ensures that each dimension in the consumer subgraph 804 has a unique mapping to a dimension in the producer subgraph 802, to maintain functional correctness during the merge operation. The unique mapping facilitates the resolution of the OW-IR connections into logical pipes, for example as discussed with reference to Figure 10.

After the rewrite, a chain 820 is formed with a chain space that includes dimensions from both the consumer subgraph 804 and the updated producer subgraph 824: [a0, a1, a2, a3, a4, b0, b1, b2, b3, b4]. Within this updated structure, the updated producer subgraph 824 contains the original output operations and their duplicates, including an updated second output operation 826, forming part of the duplicate of the producer subgraph 822 after dimensional permutation and having dimensions [b0, b1, b2] (where the second dimension of the duplicate of the producer subgraph space after dimensional permutation corresponds to the fourth dimension of the original producer subgraph space). A transform from the chain space to the updated producer subgraph space can then be defined.

The merging process ensures that the production output that is output, e.g. written to storage, by the first output operation 806 is provided to the first input operation 810, while the duplicate of the production output that is output by the updated second output operation 826 is provided to the second input operation 812. This approach maintains the correct data flow between the operations while enabling the subgraphs to be combined into a single, more efficient chain.

The duplication of output operations and their associated outputs enables a single producer to feed multiple consumers without breaking the chain. This approach maintains the performance benefits of chaining while supporting complex graph topologies where one operation's output needs to be provided to multiple subsequent operations. By creating duplicates of the output operation and its associated production output, the system can properly route data to multiple input operations in the consumer subgraph.

### Merging Producer Subgraphs to Achieve Consumption Coherence

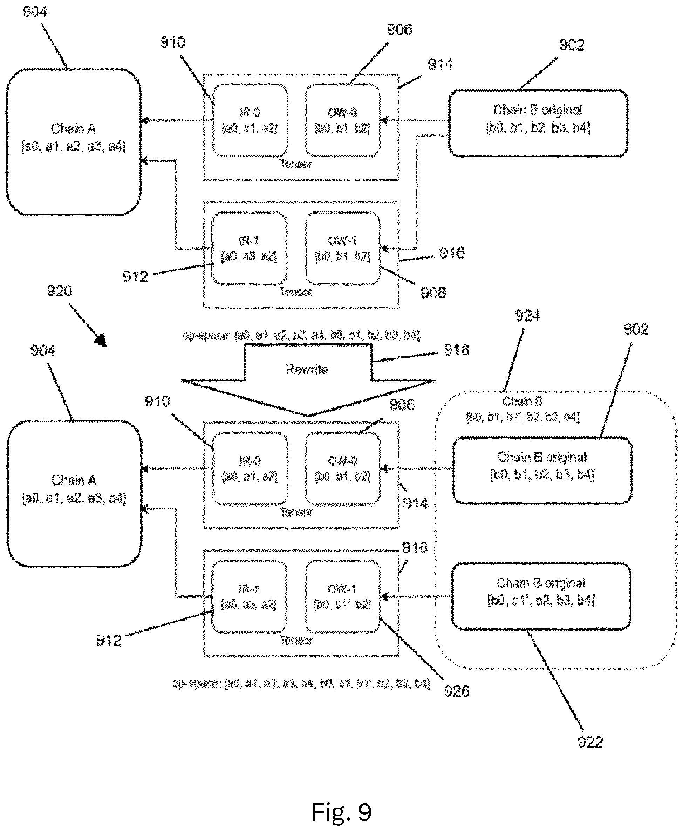

Figure 9 illustrates a process of merging a producer subgraph 902 with a consumer subgraph 904 to achieve consumption coherence. The Figure shows various components involved in this merging process and the transformations that occur.

The producer subgraph 902 has a producer subgraph space with dimensions [b0, b1, b2, b3, b4]. Within this producer subgraph 902, there is a first output operation 906 associated with a first output operation space having dimensions [b0, b1, b2] and a second output operation 908 associated with a second output operation space also having dimensions [b0, b1, b2]. These output operations output, e.g. by writing to storage, first and second tensors 914, 916 that are provided to the consumer subgraph 904.

The consumer subgraph 904 has a consumer subgraph space with dimensions [a0, a1, a2, a3, a4]. Within this consumer subgraph 904, there is a first input operation 910 associated with a first input operation space having dimensions [a0, a1, a2] and a second input operation 912 associated with a second output operation space having dimensions [a0, a3, a2]. The first input operation 910 and the second input operation 912 receive the first and second tensors 914, 916 from the producer subgraph 902, and for example involve reading the first and second tensors 914, 916 from the storage.

In Figure 9, multiple consumer subgraph dimensions are mapped to a single producer subgraph dimension prior to performing a rewrite 918. In this example, prior to merging the producer subgraph 902 and the consumer subgraph 904, it is identified that a given dimension of the producer subgraph space maps to both a first dimension of the consumer subgraph space and a second dimension of the consumer subgraph space. In this case, a rewrite 918 is performed as part of the merging to address consumption coherence issues that arise when multiple dimensions in the consumer subgraph 904 map to a single dimension in the producer subgraph 902. In this case, the dimension a1 in the first input operation 910 and the dimension a3 in the second input operation 912 both map to the dimension b1 in the first and second output operations 906, 908 of the producer subgraph 902.

To resolve this coherence issue, a duplicate of the producer subgraph 922 is created, having a duplicate of the producer subgraph space, and an updated producer subgraph 924 is generated comprising the (original) producer subgraph 902 and the duplicate of the producer subgraph 922. The given dimension (b1) is replaced in the duplicate of the producer subgraph 922 with a further dimension (b1') so that each dimension of the consumer subgraph space uniquely maps to a different respective dimension of the producer subgraph space. Hence, after the replacement, the duplicate of the producer subgraph 922 has dimensions [b0, b1', b2, b3, b4], where b1' is a duplicate of the dimension b1. The original producer subgraph 902 continues to provide its first tensor 914 to the first input operation 910, while the duplicate of the producer subgraph 922 provides a second tensor 916 to the second input operation 912.

The updated producer subgraph 924 now includes both the original producer subgraph 902 and the duplicate of the producer subgraph 922. The further dimension, b1', is included within the updated producer subgraph space, consecutively with respect to the b1 (which was duplicated to generate b1') to reduce dimensional re-ordering subsequently. The updated producer subgraph space can thus be denoted as [b0, b1, b1', b2, b3, b4]. Within the duplicate of the producer subgraph 922, the second output operation is updated to become an updated second output operation 926 with dimensions [b0, b1', b2].

After the rewrite 918, the producer subgraph 902 and consumer subgraph 904 are merged to form a chain 920. The chain 920 has a chain space with dimensions [a0, a1, a2, a3, a4, b0, b1, b1', b2, b3, b4], which combines the dimensions from both the consumer subgraph 904 and the updated producer subgraph 924. In this merged chain 920, the first tensor 914 from the first output operation 906 is provided to the first input operation 910, and the second tensor 916 from the updated second output operation 926 is provided to the second input operation 912. A transform from the chain space to the updated producer subgraph space can then be defined.

This merging process ensures that when a production output needs to be provided to multiple input operations in the consumer subgraph 904, appropriate duplication of the output operation and its associated output can be performed to maintain the correct data flow and dimensional mapping between the producer and consumer subgraphs 902, 904.

The duplication of output operations and their associated outputs enables a single producer to feed multiple consumers without breaking the chain. When a production output needs to be provided to multiple input operations, the system identifies this requirement and generates a duplicate of the output operation along with a duplicate of the production output. This approach maintains the performance benefits of chaining while supporting complex graph topologies where data from one operation needs to flow to multiple destination operations.

### Formation of Logical Pipes

Figure 10 illustrates a block diagram of a chaining process involving a producer subgraph 1002 and a consumer subgraph 1004. The Figure depicts the process of forming a logical pipe during chaining of the producer and consumer subgraphs 1002, 1004. The process of Figure 10 may be performed after at least one functional rewrite, such as the functional rewrites of Figures 7, 8 and/or 9.

The producer subgraph 1002 initially has a producer subgraph space with dimensions [b0, b1, b2, b3, b4]. This subgraph includes a first output operation 1006 associated with a first output operation space with dimensions [b0, b1, b2] and a second output operation 1008 associated with a second output operation space with dimensions [b0, b3, b2]. These output operations are responsible for outputting first and second tensors 1014, 1016 that will be consumed by the consumer subgraph 1004.

The consumer subgraph 1004 has a consumer subgraph space with dimensions [a0, a1, a2, a3, a4]. Within this subgraph, there is a first input operation 1010 associated with a first input operation space with dimensions [a0, a1, a2] and a second input operation 1012 associated with a second output operation space with dimensions [a0, a3, a2]. These input operations are designed to obtain the tensors 1014, 1016 produced by the producer subgraph 1002.

In Figure 10, each dimension in the consumer subgraph space involved in the OW-IR interface has a unique mapping to a dimension in the producer subgraph space. Now, the two subgraphs can be merged into a single chain, converting every OW-IR connection into a pipe connect, i.e. a logical pipe, with the appropriate transforms. This is shown in Figure 10 as a rewrite 1018, which also transforms the dimensions of the producer subgraph space from [b0, b1, b2, b3, b4] to [a0, a1, a2, a3, a4], matching the dimensions of the consumer subgraph space, to align the subgraphs.

After the rewrite 1018, there is a chain 1020 in which first and second OW-IR connections (corresponding to the outputting and inputting of first and second tensors 1014, 1016) are replaced by first and second logical pipes 1022, 1024, respectively. The first logical pipe 1022 has dimensions [a0, a1, a2], and the second logical pipe 1024 has dimensions [a0, a3, a2]. A logical pipe may be a more efficient way of transferring data between connected operations in a directed graph than other approaches. This amounts to mapping the first output operation 1006 of the producer subgraph 1002 and the first input operation 1010 of the consumer subgraph 1004 from the chain 1020 to the first logical pipe 1022 for the producer subgraph 1002 to output data to and for the consumer subgraph 1004 to receive data from (and similarly for the second logical pipe 1024).

If at least one of the tensors 1014, 1016 is consumed outside the producer and consumer subgraphs 1002, 1004, the OW to write the respective tensor to storage may be preserved. If the operation-specific local space of the input and/or output operations has more dimensions than by the pipe descriptor for a given logical pipe, then solely the innermost dimensions may be mapped to the pipe transform, and block constraints for the unmapped dimensions to have a block size of 1 may be added.

The merging process effectively combines the producer and consumer subgraphs into a unified chain using logical pipes, allowing for more efficient execution by eliminating the need for intermediate storage of tensors between the subgraphs, e.g. in storage external to a hardware accelerator for executing a task comprising the subgraphs. This approach optimizes the overall computation by reducing memory traffic and enabling better utilization of internal buffers or other storage of the hardware accelerator.

### Chain Rewriting for Consolidation

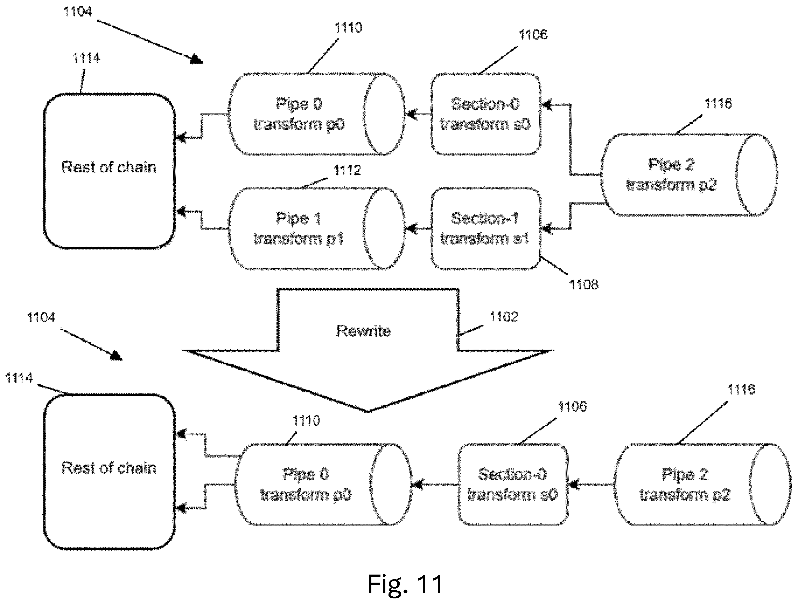

Figure 11 illustrates a rewriting 1102 a chain 1104 of base subgraphs to consolidate at least two duplicate portion of the chain 1104. In the functional rewrites discussed above, various additional operations and/or subgraphs may be added to maintain functional correctness in the chain merging process. After generation of the chain, and after the functional rewrite(s), this is the opportunity to re-examine the chain, remove redundancies and optimize the chain. Figure 11 shows an example of a rewrite 1102 but various other rewrites may be performed instead or as well, to further optimize the chain 1104.

The chain 1104 includes a first operation 1106 and a second operation 1108. The first operation 1106 and the second operation 1108 may represent computational operations to be performed on data flowing through the neural network processing system.

The chain 1104 further includes a first logical pipe 1110, a second logical pipe 1112 and a third logical pipe 1116, which facilitate data transfer between operations. The third logical pipe 1116 provides data to the first and second operations 1106, 1108. The output of the first and second operations 1106, 1108 are provided to the first and second logical pipes 1110, 1112, which provide the data therein to the rest of the chain 1114. The rest of the chain 1114 represents additional operations that may follow the first and second input operations.

In Figure 11, the first and second logical pipes 1110, 1112 are the same as each other, and the first operation 1106 and the second operation 1108 are the same as each other. In this case, the rewrite 1102 consolidates the first logical pipe 1110 with the second logical pipe 1112 since they are the same, and e.g. share the same characteristics. Additionally, the rewrite 1102 consolidates the second input operation 1108 with the first input operation 1106 as they are the same, and e.g. perform identical functions. This consolidation creates a more efficient chain structure. In this case, the consolidation amounts to removing the duplicate portions of the chain, i.e. the second operation 1108 and second logical pipe 1112, which are duplicates of the first operation 1106 and first logical pipe 1110 respectively.

By consolidating identical operations and/or logical pipes, the neural network processing system can reduce redundancy and improve processing efficiency.

The consolidation process enables the neural network processing system to optimize computational resources by eliminating duplicate operations and data paths. This optimization is particularly beneficial when performing complex processing, such as processing of complex neural networks, with numerous identical or similar operations that can be combined to reduce the overall computational load.

### Chain Rewriting to Remove Unused Logical Pipes

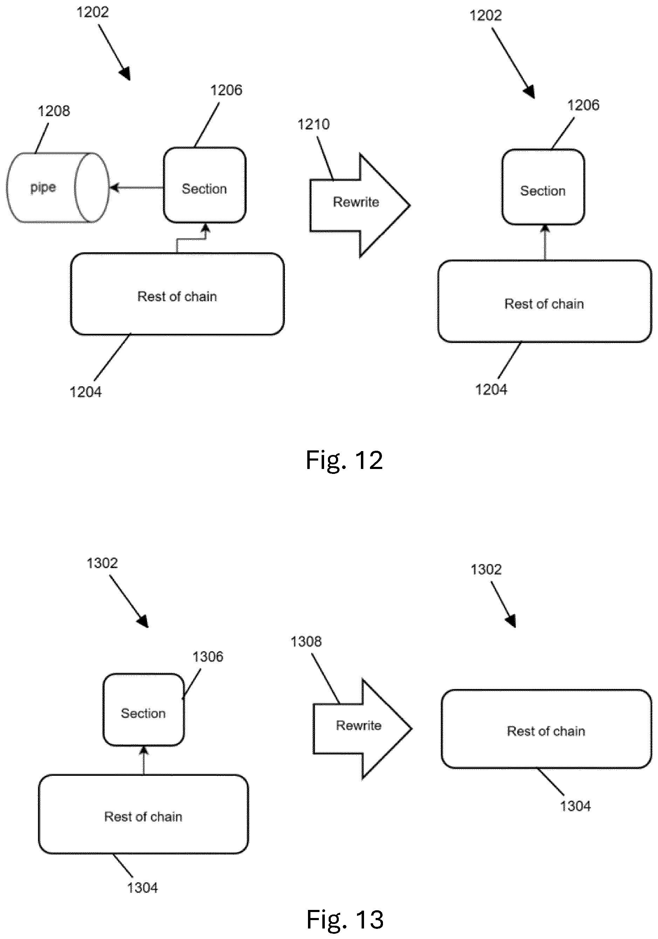

Figure 12 illustrates adjusting, e.g. rewriting 1210, a chain 1202 of base subgraphs to remove at least one redundant aspect. In Figure 11, the redundant aspect is an unconsumed output of an output operation that is unconsumed within the chain 1202, which in this case corresponds to an unused logical pipe 1208. The rewrite 1210 may be performed after the functional rewrite(s) discussed above.

The chain 1202 comprises an operation 1206 that receives data from the rest of the chain 1204 and outputs data to the logical pipe 1208. The logical pipe 1208 is not consumed within the chain 1202 itself. The rewrite 1210 represents a transformation operation that can modify the structure of the chain 1202 to optimize processing efficiency. Through the rewrite 1210, redundant aspects of the chain 1202 can be identified and removed. In this example, the logical pipe 1208 is identified as redundant as it is associated with an output that is not consumed within the chain 1202. By removing such redundant elements, the processing efficiency of the neural network can be improved while maintaining functional correctness.

### Chain Rewriting to Remove Non-Output Operations

Figure 13 illustrates a further example of adjusting, e.g. rewriting 1308, a chain 1302 of base subgraphs to remove at least one redundant aspect. The rewrite 1308 may be performed after the functional rewrite(s) discussed above.

The chain 1302 comprises an operation 1306 that receives data from the rest of the chain 1304. During execution of a rewriting process, the operation 1306 is analyzed to determine if it can be removed from the chain 1302. The operation 1306 may be identified as redundant if it does not generate an output for storage. Specifically, the operation 1306 may be a non-output operation positioned at a branch end of a branch of the chain 1302. In such cases, the operation 1306 does not contribute to the final output of the chain and can be safely removed without affecting the functional correctness of the chain.

The rewriting process produces a rewritten version of the chain 1302, which maintains the functionality of the original chain 1302 but with improved efficiency through the removal of the redundant operation 1306. The rewritten version of the chain 1302 includes the rest of the chain 1304 portion of the original chain 1302, but omits the redundant operation 1306, resulting in a more streamlined chain structure.

The rewriting process shown in Figure 13 may be part of a larger chain optimization framework that aims to improve the efficiency of execution of a task defined by a directed graph of operations. By identifying and removing redundant operations such as the operation 1306, the rewriting process can reduce computational overhead and improve overall performance of the task execution. It is to be appreciated that an output operation (e.g. an OW section) may be excluded from the removal of redundant operations, e.g. defined as operations that do not provide an output to a logical pipe.

### Dimensional Reduction Through Chain Space Rewriting

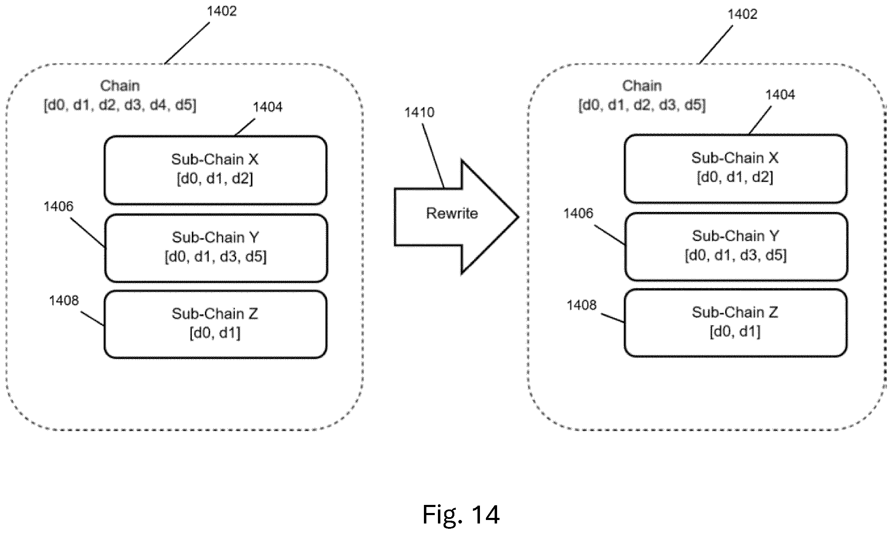

Figure 14 illustrates a block diagram of a rewrite operation 1410 performed on a chain 1402. The chain 1402 initially has a chain space with dimensions [d0, d1, d2, d3, d4, d5]. The rewrite operation 1410 removes dimension d4 from the chain space, resulting in a modified version of the chain 1402 with dimensions [d0, d1, d2, d3, d5]. This rewrite operation removes a redundant aspect from the chain space, specifically dimension d4, which is unused by the base subgraphs of the chain.

The chain 1402 includes a first sub-chain 1404, a second sub-chain 1406, and a third sub-chain 1408. Each sub-chain operates within its own specific sub-chain space that may be a subset of the overall chain space. The first sub-chain 1404 has a first sub-chain space with dimensions [d0, d1, d2], utilizing only three of the original six dimensions. The second sub-chain 1406 has a second sub-chain space with dimensions [d0, d1, d3, d5], utilizing four dimensions but not using dimension d4. The third sub-chain 1408 has a third sub-chain space with dimensions [d0, d1], utilizing only two dimensions.

By examining the dimensional spaces of each sub-chain, it becomes apparent that dimension d4 is not utilized by any of the sub-chains 1404, 1406, and 1408. The rewrite operation 1410 identifies this unused dimension d4 and removes it from the chain space, optimizing the chain 1402 by eliminating unnecessary complexity. This optimization simplifies the chain representation and potentially improves computational efficiency by reducing the dimensionality of the chain space to be processed.

The rewrite operation 1410 maintains the functional equivalence of the chain 1402 while reducing its dimensional complexity. After the rewrite operation 1410, the modified version of the chain 1402 maintains all the necessary dimensions required by its constituent sub-chains, ensuring that all computational requirements are preserved. The dimensions d0 and d1 are common to all sub-chains, dimension d2 is specific to the first sub-chain 1404, and dimensions d3 and d5 are utilized by the second sub-chain 1406.

The chain space may also or instead be adjusting to combine at least two dimensions of the chain space that are non-orthogonal to each other in the chain space. Orthogonal dimensions are for example dimensions that exist as separate iteration dimensions in the chain space of the chain. The starting point to deduce orthogonality is to examine every operation in a chain. For each operation-specific local space for the operations in a given chain, such as a consumer subgraph space for a consumer subgraph, a producer subgraph space for a producer subgraph and so forth, all chain space dimensions that are projected onto the operation-specific local space are considered to be orthogonal to each other. Two dimensions can be merged directly in the chain space if the dimensions are not orthogonal to each other in the chain space and if the dimensions have the same task boundaries.

Combining of non-orthogonal dimensions of the chain space can also reduce or avoid unnecessary recomputation, which can lead to significant improvements in computational efficiency. For example, given two Reduction operations whose outputs feed into an ADD operation, the rest of the chaining process described herein creates a chain space with 2 reduction dimensions, each inherited from the two Reduction operations. This means that one of the Reduction operations will be recomputed in its reduction dimension for each iteration in the other Reduction operation's reduction dimension. The identifying of the two reduction dimensions as being non-orthogonal and merging them allows a single dimension in the chain space to drive the reduction in both Reduction operations, avoiding the recomputation.

### Generation of Logical Forwarding Pipe

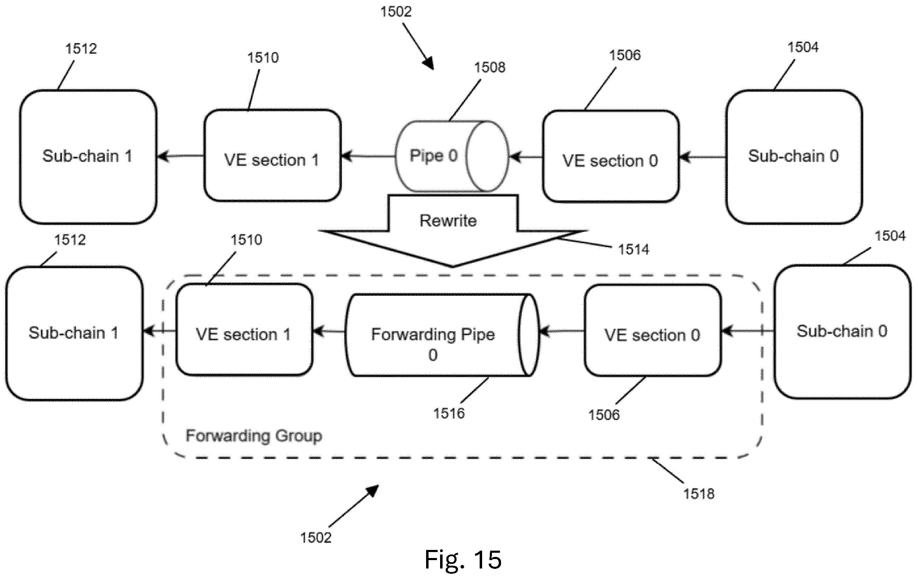

Figure 15 shows a block diagram illustrating a chain 1502 that includes a first sub-chain 1504 and a second sub-chain 1512. The chain 1502 represents a sequence of operations to be performed to execute a task.

The first sub-chain 1504 includes a first vector engine operation 1506 and a logical pipe 1508. The first vector engine operation 1506 is configured to perform vector processing operations, such as element-wise arithmetic operations, activation functions, or other vector-based computations. The logical pipe 1508 is connected to the output of the first vector engine operation 1506 and serves as a data pathway for transferring processed data.

The second sub-chain 1512 includes a second vector engine operation 1510. The second vector engine operation 1510 is also configured to perform vector processing operations, and is configured to receive the data from the logical pipe 1508. Both the first vector engine operation 1506 and the second vector engine operation 1510 are mapped to the same execution unit of the processor, specifically the vector engine, for executing the task (but need not be in other examples).

A rewrite 1514 is applied to the chain 1502. The rewrite 1514 is a transformation operation that modifies the structure or configuration of the chain to optimize performance or enable certain functionality. In this case, the rewrite 1514 transforms the logical pipe 1508 into a logical forwarding pipe 1516. This amounts to tagging a connection (in this case the logical forwarding pipe 1516) between the first and second sub-chains 1504, 1512 (which correspond to producer and consumer subgraphs, respectively) as associated with a plurality of sequential operations that are to be performed by the vector engine.

The logical forwarding pipe 1516 may provide a more efficient data transfer mechanism between the first vector engine operation 1506 and the second vector engine operation 1510. Unlike standard logical pipes, the logical forwarding pipe 1516 allows for direct data forwarding between consecutive vector engine operations, reducing data movement overhead and improving processing efficiency.

Additionally, the first vector engine operation 1506 and the second vector engine operation 1510 are grouped together into a logical forwarding group 1518. The logical forwarding group 1518 represents a collection of vector engine operations that can utilize the forwarding pipe mechanism for data transfer. This grouping allows a processor, such as a neural engine, to treat the operations within the group as a unified entity for scheduling and execution purposes, potentially enabling further optimizations. The operations within a forwarding group can be mapped to the same execution unit of a processor, e.g. the vector engine in this case, leveraging spatial locality in hardware to reduce data movement between different processor components.

This approach may involve generating forwarding pipe configuration data indicating that the logical pipe 1508 is a logical forwarding pipe for forwarding data generated by a set of operations of the chain of base subgraphs that are to be grouped together for execution (in this case, the forwarding group 1518), where the set of operations comprise at least one operation of the producer subgraph (in this case, the first vector engine operation 1508). The forwarding pipe configuration data may be used by the processor to facilitate scheduling and execution of the logical forwarding group 1518.

The arrangement shown in Figure 15 demonstrates how the chain structure can be optimized through rewrites to take advantage of architectural features such as logical forwarding pipes. This optimization can lead to more efficient execution of neural network operations by reducing data movement overhead between consecutive vector engine operations. Although the example of Figure 15 illustrates the concept of logical forwarding pipes and groups in the context of vector engine operations, it is to be appreciated that these concepts may be applied equally to other operations.

### Hardware Implementation

A data structure in the form of a directed graph may comprise plural sequenced operations that are connected to one another for execution in a chain. Described below is an example hardware arrangement for executing chained operations for at least a portion of a directed graph.

Figure 16 shows schematically an example of a data processing system 1600 including offload processor 1630 which may act as a co-processor or hardware accelerator unit for a host processing unit 1610. The host processing unit 1610 is an example of a processor configured to perform the methods herein to generate task data. For example, the host processing unit 1610 may generate the task data then compile the task data into machine instructions for sending to the processor 1630 to instruct the processor 1630 to execute the task. The processor 1630 is configured to operate on tasks represented in the form of graphs of operations (such as the further directed graph of operations described herein), and may be referred to as a graph processor. It will be appreciated that the types of hardware accelerator which the processor 1630 may provide dedicated circuitry for is not limited to that of Neural Processing Units (NPUs) or Graphics Processing units (GPUs) but may be dedicated circuitry for any type of hardware accelerator. GPUs may be well-suited for performing certain types of arithmetic operations such as neural processing operations, as these operations are generally similar to the arithmetic operations that may be required when performing graphics processing work (but on different data formats or structures). Furthermore, GPUs typically support high levels of concurrent processing (e.g., supporting large numbers of execution threads), and are optimized for data-plane (rather than control plane) processing, all of which means that GPUs may be well-suited for performing other types of operations.

That is, rather than using entirely separate hardware accelerators, such as a machine learning processing unit that is independent of the graphics processor, such as an NPU, or only being able to perform machine learning processing operations entirely using the hardware of the GPU, dedicated circuitry may be incorporated into the GPU itself.

This means that the hardware accelerator circuitry incorporated into the GPU is operable, to utilize some of the GPU's existing resources (e.g., such that at least some functional units and resource of the GPU can effectively be shared between the different hardware accelerator circuitry, for instance), whilst still allowing an improved (more optimized) performance compared to performing all the processing with general purpose execution.

As such, the processor 1630 may be a GPU that is adapted to comprise a number of dedicated hardware resources, such as those which will be described below.

In some examples, this can be particularly beneficial when performing machine learning tasks that themselves relate to graphics processing work, as in that case all of the associated processing can be (and preferably is) performed locally to the graphics processor, thus improving data locality, and (e.g.) reducing the need for external communication along the interconnect with other hardware units (e.g., an NPU). **In** that case, at least some of the machine learning processing work can be offloaded to the machine learning processing circuit, thereby freeing the execution unit to perform actual graphics processing operations, as desired.

In other words, in some examples, providing a machine learning processing circuit within the graphics processor, this means that the machine learning processing circuit is preferably then operable to perform at least some machine learning processing operations whilst the other functional units of the graphics processor are simultaneously performing graphics processing operations. In the situation where the machine learning processing relates to part of an overall graphics processing task this can therefore improve overall efficiency (in terms of energy efficiency, throughput, etc.) for the overall graphics processing task.

In Figure 16, the processor 1630 is arranged to receive a command stream 1620 from a host processor 1610, such as a central processing unit (CPU). The command stream comprises at least one command in a given sequence, each command to be executed, and each command may be decomposed into a number of tasks, such as tasks discussed in this document. As such, the command stream may comprise task data generated according to the methods herein, which may be decomposed into at least one task. These tasks may be self-contained operations, such as a given machine learning operation or a graphics processing operation. It will be appreciated that there may be other types of tasks depending on the command.

The command stream 1620 is sent by the host processor 1610 and is received by a command processing unit 1640 which is arranged to schedule the commands within the command stream 1620 in accordance with their sequence. The command processing unit 1640 is arranged to schedule the commands and decompose each command in the command stream 1620 into at least one task. Once the command processing unit 1640 has scheduled the commands in the command stream 1620, and generated a plurality of tasks for the commands, the command processing unit issues each of the plurality of tasks to at least one compute unit 1650a, 1650b each of which are configured to process at least one of the plurality of tasks. The compute units 1650a, 1650b are examples of respective processing modules, such as graph processing modules, for executing graphs represented by task data generated according to the methods described herein.

The processor 1630 comprises a plurality of compute units 1650a, 1650b. Each compute unit 1650a, 1650b, may be a shader core of a GPU specifically configured to undertake a number of different types of operations, however it will be appreciated that other types of specifically configured processor may be used, such as a general-purpose processor configured with individual compute units, such as compute units 1650a, 1650b. Each compute unit 1650a, 1650b comprises a number of components, and at least a first processing module 1652a, 1652b for executing tasks of a first task type, and a second processing module 1654a, 1654b for executing tasks of a second task type, different from the first task type. In some examples, the first processing module 1652a, 1652b may be a processing module for processing neural processing operations, such as those which would normally be undertaken by a separate NPU. In these cases, the first processing module 1652a, 1652b is for example a neural engine. Similarly, the second processing module 1654a, 1654b may be a processing module for processing graphics processing operations forming a set of pre-defined graphics processing operations which enables the implementation of a graphics processing pipeline, which may be referred to as a graphics processor. For example, such graphics processing operations include a graphics compute shader task, a vertex shader task, a fragment shader takes, a tessellation shader task, and a geometry shader task. These graphics processing operations may all form part of a set of pre-defined operations as defined by an application programming interface, API. Examples of such APIs include Vulkan, Direct3D and Metal. Such tasks would normally be undertaken by a separate / external GPU. It will be appreciated that any number of other graphics processing operations may be capable of being processed by the second processing module.

As such, the command processing unit 1640 issues tasks of a first task type to the first processing module 1652a, 1652b of a given compute unit 1650a, 1650b, and tasks of a second task type to the second processing module 1654a, 1654b of a given compute unit 1650a, 1650b. The command processing unit 1640 would issue machine learning / neural processing tasks to the first processing module 1652a, 1652b of a given compute unit 1650a, 1650b where the first processing module 1652a, 1652b is optimized to process neural network processing tasks, for example by comprising an efficient means of handling a large number of multiply-accumulate operations. Similarly, the command processing unit 1640 would issue graphics processing tasks to the second processing module 1654a, 1654b of a given compute unit 1650a, 1650b where the second processing module 1652a, 1654a is optimized to process such graphics processing tasks. In some examples, the first and second may both be neural processing tasks issued to a first processing module 1652a, 1652b, which is a neural engine. Such a neural processing task may involve the processing of a tensor, e.g., representing a feature map, with weights associated with a layer of a neural network.

In addition to comprising a first processing module 1652a, 1652b and a second processing module 1654a, 1654b, each compute unit 1650a, 1650b also comprises a memory in the form of a local cache 1656a, 1656b for use by the respective processing module 1652a, 1652b, 1654a, 1654b during the processing of tasks. Examples of such a local cache 1656a, 1656b is a L1 cache. The local cache 1656a, 1656b may, for example, a synchronous dynamic random-access memory (SDRAM). For example, the local cache 1656a, 1656b may comprise a double data rate synchronous dynamic random-access memory (DDR-SDRAM). It will be appreciated that the local cache 1656a, 1656b may comprise other types of memory.

The local cache 1656a, 1656b is used for storing data relating to the tasks which are being processed on a given compute unit 1650a, 1650b by the first processing module 1652a, 1652b and second processing module 1654a, 1654b. It may also be accessed by other processing modules (not shown) forming part of the compute unit 1650a, 1650b the local cache 1656a, 1656b is associated with. However, in some examples, it may be necessary to provide access data associated with a given task executing on a processing module of a given compute unit 1650a, 1650b to a task being executed on a processing module of another compute unit (not shown) of the processor 1630. In such examples, the processor 1630 may also comprise storage 1660, for example a cache, such as an L2 cache, for providing access to data use for the processing of tasks being executed on different compute units 1650a, 1650b.

By providing a local cache 1656a, 1656b tasks which have been issued to the same compute unit 1650a, 1650b may access data stored in the local cache 1656a, 1656b, regardless of whether they form part of the same command in the command stream 1620. The command processing unit 1640 is responsible for allocating tasks of commands to given compute units 1650a, 1650b such that they can most efficiently use the available resources, such as the local cache 1656a, 1656b, thus reducing the number of read/write transactions required to memory external to the compute units 1650a, 1650b, such as the storage 1660 (L2 cache) or higher level memories. One such example, is that a task of one command issued to a first processing module 1652a of a given compute unit 1650a, may store its output in the local cache 1656a such that it is accessible by a second task of a different (or the same) command issued to a given processing module 1652a, 1654a of the same compute unit 1650a.

One or more of the command processing unit 1640, the compute units 1650a, 1650b, and the storage 1660 may be interconnected using a bus. This allows data to be transferred between the various components. The bus may be or include any suitable interface or bus. For example, an ARM^{®} Advanced Microcontroller Bus Architecture (AMBA^{®}) interface, such as the Advanced eXtensible Interface (AXI), may be used.

Figure 17 is a schematic diagram of a neural engine 1700, which in this example is used as a first processing module 1652a, 1652b in a data processing system 1600 in accordance with Figure 16. The neural engine 1700 includes a command and control module 1710. The command and control module 1710 receives tasks from the command processing unit 1640 (shown in Figure 16), and also acts as an interface to storage external to the neural engine 1700 (such as a local cache 1656a, 1656b and/or a L2 cache 1660) which is arranged to store data to be processed by the neural engine 1700 such as data representing a tensor, or data representing a stripe of a tensor. The external storage may additionally store other data to configure the neural engine 1700 to perform particular processing and/or data to be used by the neural engine 1700 to implement the processing such as neural network weights.

The command and control module 1710 interfaces to a handling unit 1720, which is for example a traversal synchronization unit (TSU). In this example, each task corresponds to a stripe of a tensor which is to be operated upon in accordance with a sequence of operations according to at least a portion (e.g. a sub-graph) of the graph representation of the neural network. The tensor for example represents a feature map for processing using the neural network. A neural network typically includes a sequence of layers of processing, with an output from each layer being used as an input to the next layer. Each layer for example processes an input feature map by operating upon the input feature map to generate an output feature map, which is used as the input feature map for the next layer. The term "feature map" is used generically herein to refer to either an input feature map or an output feature map. The processing performed by a given layer may be taken to correspond to an operation.

In this example, the handling unit 1720 splits data representing a stripe of a feature map into a plurality of blocks of data, each of which represents a respective part of the feature map. The handling unit 1720 also obtains, from storage external to the neural engine 1700 such as the L2 cache 1660, task data defining operations selected from an operation set comprising a plurality of operations. In this example, the operations are structured as a chain of operations representing a sequence of layers of the neural network. A block of data is allocated as an input to one of the operations by the handling unit 1720.

The handling unit 1720 coordinates the interaction of internal components (also referred to as execution units herein) of the neural engine 1700, which include a weight fetch unit 1722, an input reader 1724, an output writer 1726, a direct memory access (DMA) unit 1728, a dot product unit (DPU) array 1730, a vector engine 1732, a transform unit 1734, an accumulator buffer 1736, and a storage 1738, for processing of blocks of data. The data dependencies across the functional units are tracked by the handling unit 1720. Processing is initiated by the handling unit 1720 in a functional unit if all input blocks are available and space is available in the storage 1738 of the neural engine 1700. The storage 1738 may be considered to be a shared buffer, in that various functional units of the neural engine 1700 share access to the storage 1738.

In the context of a directed graph representing the operations to be performed, each of the internal components that operates upon data can be considered to be one of two types of component. The first type of component is an execution unit (and is identified within the neural engine 1700 as such) that maps to a section that performs a specific instance of an operation within the graph. For example, the weight fetch unit 1722, input reader 1724, output writer 1726, dot product unit array 1730, vector engine 1732, transform unit 1734 each are configured to perform one or more pre-determined and fixed operations upon data that it receives. Each of these sections can be uniquely identified with an identifier and each execution unit can also be uniquely identified.

Similarly, all physical storage elements within the neural engine (and in some instances portions of those physical storage elements) can be considered to be uniquely identified within the neural engine. The connections between sections in the graph representing the neural network are also referred to as pipes within the context of the graph. These pipes can also be mapped to the uniquely identified physical storage elements of a storage in the neural engine. For example, the accumulator buffer 1736 and storage 1738 (and portions thereof) can each be regarded as a storage element that can act to store data for a pipe within the graph. The pipes act as connections between the sections (as executed by execution units) to enable a sequence of operations as defined in the graph to be chained together within the neural engine 1700. Put another way, the logical dataflow of the graph can be mapped to the physical arrangement of execution units and storage elements within the neural engine 1700. Under the control of the handling unit 1720, execution can be scheduled on the execution units and data can be passed between the execution units via the storage elements in accordance with the mapping, such that the chained operations of a graph can be executed without needing to write data memory external to the neural engine 1700 between executions. The handling unit 1720 is configured to control and dispatch work representing performing an operation of the graph on at least a portion of the data provided by a pipe.

The weight fetch unit 1722 fetches weights associated with the neural network from external storage and stores the weights in the storage 1738. The input reader 1724 reads data to be processed by the neural engine 1700 from external storage, such as a block of data representing part of a tensor. The output writer 1726 writes data obtained after processing by the neural engine 1700 to external storage. The weight fetch unit 1722, input reader 1724 and output writer 1726 interface with the external storage (which is for example the local cache 1656a, 1656b, which may be a L1 cache such as a load/store cache) via the DMA unit 1728.

Data is processed by the DPU array 1730, vector engine 1732 and transform unit 1734 to generate output data corresponding to an operation in the graph. The result of each operation is stored in a specific pipe within the neural engine 1700. The DPU array 1730 is arranged to perform one or more operations associated with a dot product operation between two operands, such as between an array of weights and a corresponding block of data (e.g., representing part of a tensor). The vector engine 1732 is arranged to perform elementwise operations, for example to apply scale parameters to scale an output of a dot product calculated by the DPU array 1730. Data generated during the course of the processing performed by the DPU array 1730 and the vector engine 1732 may be transmitted for temporary stage in the accumulator buffer 1736 which acts as a pipe between the previous operation and the subsequent operation, from where it may be retrieved by either the DPU array 1730 or the vector engine 1732 (or another different execution unit) for further processing as desired.

The transform unit 1734 is arranged to perform in-block transforms such as dimension broadcasts or axis swaps. The transform unit 1734 obtains data from a pipe, such as storage 1738 (e.g., after processing by the DPU array 1730 and/or vector engine 1732), and writes transformed data back to the storage 1738.

To make efficient use of the storage 1738 available within the neural engine 1700, the handling unit 1720 determines an available portion of the storage 1738, which is available during execution of part of a first task (e.g., during processing of a block of data associated with the first task by the DPU array 1730, vector engine 1732 and/or transform unit 1734). The handling unit 1720 determines a mapping between at least one logical address associated with data generated during execution of a second task (e.g., by processing of a block of data associated with the second task by the DPU array 1730, vector engine 1732 and/or transform unit 1734) and at least one physical address of the storage 1738 corresponding to the available portion. The logical address is for example a global address in a global coordinate system. Hence, by altering the physical address corresponding to a given logical address, the handling unit 1720 can effectively control usage of the storage 1738 without requiring a change in software defining the operation to be performed, as the same logical address can still be used to refer to a given element of the tensor to be processed. The handling unit 1720 identifies the at least one physical address corresponding to the at least one logical address, based on the mapping, so that data associated with the logical address is stored in the available portion. The handling unit 1720 can perform the mapping process according to any of the examples herein.

It will be appreciated that in a graph of operations there does not need to be only a single instance of a particular type of operation. For example, multiple instances of a convolution operation could be present in a graph of operations. In the above example hardware arrangement only a single convolution engine may be present. Therefore, it will be appreciated that there does not need to be a direct 1: 1 mapping between operations in the graph (sections) and execution units, and similarly no direct 1: 1 mapping between pipes and storage elements. In particular, a single execution unit may be configured at different instances in time to execute different instances of a convolution operation (e.g., first and second sections). Similarly, the input reader may be required to read data as part of different sections in the graph. The same can be said for storage elements and pipes.

All storage in the neural engine 1700 may be mapped to corresponding pipes, including look-up tables, accumulators, etc. Some storage may be relatively fixed purpose, for example, if the hardware were limited to one convolution operation per graph the accumulator buffer might also be limited to being mapped to one pipe, and scale/bias/shift buffer might be limited to being mapped to one pipe; however, both would likely be double buffered. If the neural engine supports 2 look-up tables (LUTs), then a maximum of 2 pipes could be used to target the LUTs to avoid needing to thrash the LUT storage; LUT pipes might then be single buffered. All other pipes could be mapped to a common Shared Buffer (or portions thereof) with fewer restrictions. Width and height of pipe can also be programmable, resulting a highly configurable mapping between pipes and storage elements within the neural engine 1700.

Ordering of execution of the sections is implied by dependencies on inputs. A memory load operation has no data dependencies (unless it is a gather operation), so is implicitly early in the graph. The consumer of the pipe the memory read produces is implicitly after the memory read. A memory store operation is near the end of the graph, as it produces no pipes for other operations to consume. The sequence of execution of a chain of operations is therefore handled by the handling unit 1720 as will be explained in more detail later.

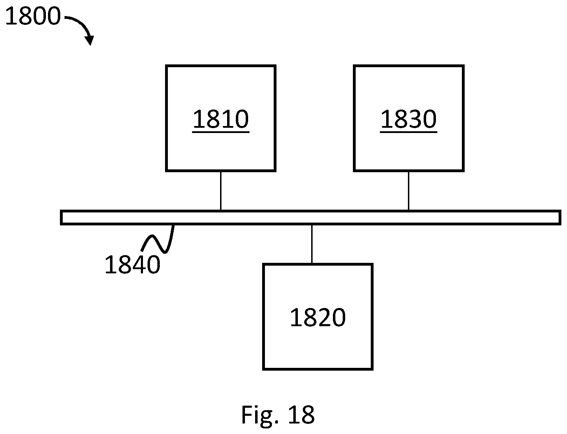

Figure 18 shows schematically a system 1800 for allocating handling data, and in some examples generating a plurality of blocks of input data for processing.

The system 1800 comprises host processor 1810 such as a central processing unit, or any other type of general processing unit. The host processor 1810 issues a command stream comprising a plurality of commands, each having a plurality of tasks associated therewith.

The system 1800 also comprises an offload processor 1830a, which may be similar to or the same as the processor 1630 of Figure 16 and may comprise at least some of the components of and/or be configured to perform the methods described above. The processor 1830a comprises at least a plurality of compute units 1650a, 1650b and a command processing unit 1640. Each compute unit may comprise a plurality of processing modules each configured to perform at least one type of operation. The system 1800 may also include at least one further processor 1830b, which may be the same as the processor 1830a. The processor 1830a, and the host processor 1810 may be combined as a System on Chip (SoC) or onto multiple SoCs to form one or more application processors.

The system 1800 also comprises memory 1820 for storing data generated by the tasks externally from the processor 1830, such that other tasks operating on other processors may readily access the data. However, it will be appreciated that the external memory usage will be used sparingly, due to the allocation of tasks as described above, such that tasks requiring the use of data generated by other tasks, or requiring the same data as other tasks, will be allocated to the same compute unit 1650a, 1650b of a processor 1830 so as to maximize the usage of the local cache 1656a, 1656b.

In some examples, the system 1800 may comprise a memory controller (not shown), which may be a dynamic memory controller (DMC). The memory controller is coupled to the memory 1820. The memory controller is configured to manage the flow of data going to and from the memory. The memory may comprise a main memory, otherwise referred to as a 'primary memory'. The memory may be an external memory, in that the memory is external to the system 1800. For example, the memory 1820 may comprise 'off-chip' memory. The memory may have a greater storage capacity than local caches of the processor 1830 and/or the host processor 1810. In some examples, the memory 1820 is comprised in the system 1800. For example, the memory 1820 may comprise 'on-chip' memory. The memory 1820 may, for example, comprise a magnetic or optical disk and disk drive or a solid-state drive (SSD). In some examples, the memory 1820 comprises a synchronous dynamic random-access memory (SDRAM). For example, the memory 1820 may comprise a double data rate synchronous dynamic random-access memory (DDR-SDRAM).

One or more of the host processor 1810, the processor 1830, and the memory 1820 may be interconnected using a system bus 1840. This allows data to be transferred between the various components. The system bus 1840 may be or include any suitable interface or bus. For example, an ARM^{®} Advanced Microcontroller Bus Architecture (AMBA^{®}) interface, such as the Advanced eXtensible Interface (AXI), may be used.

A system for implementing the methods herein, such as the system 1800, may for example be a system on a chip (SoC). Such a system may comprise a host processor, for example be a central processing unit (CPU). The system may further comprise an offload processor such as a graphics processing unit (GPU), Neural Processing Unit (NPU), an Application-Specific Integrated Circuits (ASIC) or a Field-Programmable Gate Array (FPGA). The offload processor may comprise a command processing unit connected to one or more processing modules. The processing module may for example be a neural engine (NE). The processing module may comprise a storage with a plurality of storage elements, and a plurality of execution units. Such a system may be used to execute operations on input data. The operations may be in the form of a directed graph. The host processor may instruct the processing module to execute the operations. The processing module may have different hardware constraints, such as the number and type of execution units, memory constraints of the storage and storage elements and storage bandwidth of the storage and/or storage elements.

### Additional Variations

The chain space dimensionality described in the preceding sections can be implemented such that it corresponds to a sum of the dimensionality of the consumer subgraph space and the dimensionality of the producer subgraph space. This summation of dimensionalities enables the chain space to handle operation sequences with operation spaces that are more complex than any single section space. By combining the dimensions from both subgraph spaces, the chain space provides a comprehensive framework for executing the combined operations efficiently.

The chain space can be defined by a multi-dimensional nested loop structure comprising multiple dimensions to be iterated over to execute the chain of base subgraphs. This nested loop structure may include at least one inner dimension and at least one outer dimension, outwards of the at least one inner dimension, The at least one inner dimension may define the producer subgraph space and the at least one outer dimension may define the consumer subgraph space. This arrangement ensures proper execution ordering, as the consumer dimensions being positioned as outer dimensions relative to the producer dimensions guarantees that a complete traversal of the producer subgraph space occurs for each block issued in the consumer subgraph space.

The chaining methodology supports merging a chain of base subgraphs with additional base subgraphs or with other chains of base subgraphs. This extensible chain construction capability enables building increasingly complex operation sequences while maintaining dimensional coherence. The ability to merge chains with additional elements provides flexibility in constructing processing pipelines, e.g. for neural network processing, which can adapt to various computational requirements.

A chain may include multiple instances of the same operation or the same base subgraph. This operation reuse efficiency supports more efficient handling of repeated patterns in neural network computations. For example, a chain may comprise multiple convolution operations, enabling more efficient execution of complex architectures by reducing memory traffic between operations and maintaining information across the convolution sequence.

Base subgraphs within a chain may include directed cycles, providing support for recurrent neural network structures and feedback loops that traditional chaining approaches with strict producer-consumer relationships cannot efficiently process. This capability extends the applicability of the chaining methodology to a broader range of neural network architectures.

The plurality of base subgraphs from which chain(s) can be generated may be associated with transform data defining, for each respective base subgraph of the plurality of base subgraphs, a transform between the subgraph space for the respective base subgraph and at least one operation-specific local space of the at least one operation of the respective base subgraph. These transforms for example enable efficient mapping of operations across different coordinate systems within the neural network processing framework. This approach allows for more flexible and optimized implementation of tasks by providing clear transformations between different representation spaces. The transform data associated with each base subgraph provides a flexible framework for dimensional mapping within the processing system. By defining precise transforms between subgraph spaces and operation-specific local spaces, the system can maintain dimensional (and transformation) information independently for each base subgraph. This approach allows for more versatile handling of dimensional relationships within a directed graph than previous approaches.

Each base subgraph can be structured with well-defined boundaries, beginning with an input operation, ending with an output operation, and comprising at least one operation between these boundary operations. This structure creates self-contained functional units that can be independently verified for correctness before being merged into larger chains. The input operation may obtain input from external storage, and the output operation may write output to external storage, enabling efficient data flow between the neural engine and memory systems.

When merging subgraph spaces, the system may ensure that each dimension of the consumer subgraph space uniquely maps to a corresponding dimension of the producer subgraph space. In cases where a dimension of the consumer subgraph space maps to multiple dimensions of the producer subgraph space, the system can generate an updated producer subgraph by duplicating the producer subgraph and permutating dimensions of the duplicate to ensure unique mappings. Similarly, when a dimension of the producer subgraph space maps to multiple dimensions of the consumer subgraph space, the system can generate an updated producer subgraph with a duplicate dimension replaced by a further dimension to maintain unique mappings.

The chain of base subgraphs can be adjusted to remove redundant aspects, such as unconsumed outputs, non-output operations at branch ends, or unused dimensions. This targeted redundancy elimination optimizes the chain structure without compromising functional correctness. Additionally, the chain can be adjusted to consolidate duplicate portions, reducing redundancy in the operation space and reducing computational overhead.

Non-orthogonal dimensions in the chain space can be combined to reduce the overall dimensionality of the operation space, enabling more complex chains to fit within architectural constraints while preserving computational correctness. Before chaining subgraphs, the system can verify tensor locality by determining that the producer and consumer subgraphs operate on the same portion of a tensor, ensuring data coherence and preventing invalid chains.

Connections between consumer and producer subgraphs can be tagged as associated with sequential operations to be performed by a vector engine, enabling specialized hardware optimizations like vector engine forwarding and improving data transfer efficiency between sequential operations.

The described methodology can be implemented in a processor configured to perform the chaining operations, providing hardware-level optimizations of neural network execution. A system comprising the processor may further include an offload processor with a command processing unit connected to a processing module, such as a graph processor, comprising storage elements and execution units. The graph processor may be or comprise a neural processing unit and/or a neural engine. This offload processor integration enables efficient task distribution and specialized processing for complex neural network operations. The command processing unit creates an efficient pipeline for task data handling, while multiple execution units enable parallel processing of chained operations. The processor can compile task data into machine instructions, enabling architecture-specific optimizations before offloading to ensure efficient execution on the target hardware.

The described methodology can also be implemented as computer-readable instructions stored on a non-transitory storage medium, providing flexibility to deploy the approach across different hardware platforms and integrate it into various software frameworks without requiring specialized hardware.

Further examples are set out in the following numbered clauses:
1. A computer-implemented method comprising:
   obtaining graph data representing a directed graph of operations;
   obtaining a plurality of base subgraphs based on the graph data, wherein each base subgraph of the plurality of base subgraphs comprises at least one operation of the directed graph of operations and is associated with a respective subgraph space defined by at least one dimension to be iterated over to execute the respective subgraph, the plurality of base subgraphs comprising:
      a producer subgraph comprising a producer operation of the directed graph of operations, for generation of an output; and
      a consumer subgraph comprising a consumer operation of the directed graph of operations, for consumption of the output;
      chaining the consumer subgraph to an end of the producer subgraph to generate a chain of base subgraphs, wherein the chaining comprises merging a consumer subgraph space associated with the consumer subgraph with a producer subgraph space associated with the producer subgraph to obtain a chain space associated with the chain of base subgraphs; and
      generating task data that describes a task to be executed in the form of a further directed graph of operations representative of at least part of the directed graph of operations and comprising a chain of operations based on the chain of base subgraphs.
2. The method of clause 1, wherein the chain space has a chain space dimensionality corresponding to a sum of a first dimensionality of the consumer subgraph space and a second dimensionality of the producer subgraph space.
3. The method of clause 1 or clause 2, wherein the chain space is defined by a multi-dimensional nested loop of a plurality of dimensions to be iterated over to execute the chain of base subgraphs, the plurality of dimensions comprising at least one inner dimension and at least one outer dimension, outwards of the at least one dimension within the multi-dimensional nested loop, wherein the at least one inner dimension defines the producer subgraph space and the at least one outer dimension defines the consumer subgraph space.
4. The method of any one of clauses 1 to 3, comprising merging the chain of base subgraphs with at least one of: a further base subgraph of the plurality of base subgraphs and a further chain of base subgraphs.
5. The method of any one of clauses 1 to 4, wherein the chain comprises at least one of: plurality of a particular operation of the directed graph of operations and a plurality of a particular base subgraph of the plurality of base subgraphs.
6. The method of clause 5, wherein the chain comprises a plurality of convolution operations.
7. The method of any one of clauses 1 to 6, wherein at least one base subgraph of the plurality of base subgraphs comprises a directed cycle.
8. The method of any one of clauses 1 to 7, wherein the plurality of base subgraphs are associated with transform data defining, for each respective base subgraph of the plurality of base subgraphs, a transform between the subgraph space for the respective base subgraph and at least one operation-specific local space of the at least one operation of the respective base subgraph.
9. The method of any one of clauses 1 to 8, wherein each respective base subgraph of the plurality of base subgraphs begins with an input operation, ends with an output operation and comprises at least one operation of the directed graph of operations between the input operation and the output operation.
10. The method of clause 9, wherein at least one of: the input operation is for obtaining an input from external storage and the output operation is for writing an output to the external storage and/or a further external storage.
11. The method of clause 9 or clause 10, wherein the chaining comprises mapping the output operation of the producer subgraph and the input operation of the consumer subgraph from the chain of base subgraphs to a logical pipe for the producer subgraph to output data to and for the consumer subgraph to receive data from.
12. The method of clause 11, comprising generating forwarding pipe configuration data indicating that the logical pipe is a logical forwarding pipe for forwarding data generated by a set of operations of the chain of base subgraphs that are to be grouped together for execution, the set of operations comprising at least one operation of the producer subgraph.
13. The method of clause 12, comprising mapping each of the set of the operations to the same execution unit of a processor for executing the task.
14. The method of any one of clauses 9 to 13, comprising, prior to the merging, identifying that a production output of the output operation of the producer subgraph is to be provided to a first input operation of the consumer subgraph and a second input operation of the consumer subgraph, wherein the merging comprises:
   generating a duplicate of the output operation, associated with a duplicate of the production output; and
   merging the producer and consumer subgraphs such that the production output is provided to the first input operation and the duplicate of the production output is provided to the second input operation.
15. The method of any one of clauses 9 to 14, comprising:
   identifying that a first and second production output of a further output operation of a further producer subgraph of the plurality of base subgraphs are to be provided to a further input operation of a further consumer subgraph of the plurality of base subgraphs; and
   in response, ceasing chaining of the further consumer subgraph to an end of the further producer subgraph.
16. The method of any one of clauses 1 to 15, wherein the merging comprises merging the consumer subgraph space and the producer subgraph space such that each dimension of the consumer subgraph space uniquely maps to a corresponding dimension of the producer subgraph space.
17. The method of clause 16, comprising, prior to the merging, identifying that a given dimension of the consumer subgraph space maps to a plurality of dimensions of the producer subgraph space, wherein the merging comprises:
   generating an updated producer subgraph comprising the producer subgraph and a duplicate of the producer subgraph having a duplicate of the producer subgraph space; and
   permutating at least one dimension of the duplicate of the producer subgraph space such that the given dimension of the consumer subgraph space uniquely maps to a particular dimension of the updated producer subgraph.
18. The method of clause 16 or clause 17, comprising, prior to the merging, identifying that a given dimension of the producer subgraph space maps to both a first dimension of the consumer subgraph space and a second dimension of the consumer subgraph space, wherein the merging comprises:
   generating an updated producer subgraph comprising the producer subgraph and a duplicate of the producer subgraph having a duplicate of the producer subgraph space; and
   replacing a duplicate of the given dimension of the duplicate of the producer subgraph space with a further dimension such that the first dimension of the consumer subgraph space uniquely maps to the given dimension of the updated producer subgraph and the second dimension of the consumer subgraph space uniquely maps to the further dimension of the updated producer subgraph.
19. The method of any one of clauses 1 to 18, comprising adjusting the chain of base subgraphs to remove at least one redundant aspect.
20. The method of clause 19, wherein the at least one redundant aspect comprises at least one of: an unconsumed output of an output operation that is unconsumed within the chain, a non-output operation at a branch end of a branch of the chain that does not generate an output for storage, and at least one dimension of the chain space that is unused by the base subgraphs of the chain.
21. The method of any one of clauses 1 to 20, comprising adjusting the chain of base subgraphs to consolidate at least two duplicate portions of the chain of base subgraphs.
22. The method of any one of clauses 1 to 21, comprising adjusting the chain of base subgraphs to combine at least two dimensions of the chain space that are non-orthogonal to each other in the chain space.
23. The method of any one of clauses 1 to 22, comprising determining that the producer subgraph and the consumer subgraph operate on the same portion of a tensor to be processed before chaining the consumer subgraph to the end of the producer subgraph.
24. The method of any one of clauses 1 to 23, comprising tagging a connection between the consumer subgraph and an end of the producer subgraph as associated with a plurality of sequential operations that are to be performed by a vector engine.
25. The method of any one of clauses 1 to 24, wherein the task data is task data for a graph processor operable to execute the further directed graph of operations.
26. The method of clause 25, wherein the graph processor comprises a neural engine and/or a neural processing unit.27. A processor configured to perform the method of any one of clauses 1 to 26.
28. A system comprising the processor of clause 27 and an offload processor, the offload processor comprising a command processing unit connected to a processing module, the processing module comprising:
   a storage with a plurality of storage elements; and
   a plurality of execution units,
   wherein the processor is configured to issue the task data to the command processing unit.
29. The system of clause 28, wherein the processor is configured to compile the task data into machine instructions.
30. A non-transitory computer-readable storage medium comprising a set of computer-readable instructions stored thereon which, when executed by at least one processor, are arranged to cause the at least one processor to perform the method of any one of clauses 1 to 26.

## Claims

1. A computer-implemented method comprising:
obtaining graph data representing a directed graph of operations;
obtaining a plurality of base subgraphs based on the graph data, wherein each base subgraph of the plurality of base subgraphs comprises at least one operation of the directed graph of operations and is associated with a respective subgraph space defined by at least one dimension to be iterated over to execute the respective subgraph, the plurality of base subgraphs comprising:
a producer subgraph comprising a producer operation of the directed graph of operations, for generation of an output; and
a consumer subgraph comprising a consumer operation of the directed graph of operations, for consumption of the output;
chaining the consumer subgraph to an end of the producer subgraph to generate a chain of base subgraphs, wherein the chaining comprises merging a consumer subgraph space associated with the consumer subgraph with a producer subgraph space associated with the producer subgraph to obtain a chain space associated with the chain of base subgraphs; and
generating task data that describes a task to be executed in the form of a further directed graph of operations representative of at least part of the directed graph of operations and comprising a chain of operations based on the chain of base subgraphs.

2. The method of claim 1, wherein the chain space has a chain space dimensionality corresponding to a sum of a first dimensionality of the consumer subgraph space and a second dimensionality of the producer subgraph space.

3. The method of claim 1 or claim 2, wherein the chain space is defined by a multi-dimensional nested loop of a plurality of dimensions to be iterated over to execute the chain of base subgraphs, the plurality of dimensions comprising at least one inner dimension and at least one outer dimension, outwards of the at least one dimension within the multi-dimensional nested loop, wherein the at least one inner dimension defines the producer subgraph space and the at least one outer dimension defines the consumer subgraph space.

4. The method of any one of claims 1 to 3, wherein the chain comprises at least one of: plurality of a particular operation of the directed graph of operations and a plurality of a particular base subgraph of the plurality of base subgraphs and/or wherein the chain comprises a plurality of convolution operations.

5. The method of any one of claims 1 to 4, wherein at least one base subgraph of the plurality of base subgraphs comprises a directed cycle.

6. The method of any one of claims 1 to 5, wherein the plurality of base subgraphs are associated with transform data defining, for each respective base subgraph of the plurality of base subgraphs, a transform between the subgraph space for the respective base subgraph and at least one operation-specific local space of the at least one operation of the respective base subgraph.

7. The method of any one of claims 1 to 6, wherein each respective base subgraph of the plurality of base subgraphs begins with an input operation, ends with an output operation and comprises at least one operation of the directed graph of operations between the input operation and the output operation.

8. The method of claim 7, wherein at least one of:
the input operation is for obtaining an input from external storage and/or the output operation is for writing an output to the external storage and/or a further external storage;
the method comprises, prior to the merging, identifying that a production output of the output operation of the producer subgraph is to be provided to a first input operation of the consumer subgraph and a second input operation of the consumer subgraph, wherein the merging comprises: generating a duplicate of the output operation, associated with a duplicate of the production output; and merging the producer and consumer subgraphs such that the production output is provided to the first input operation and the duplicate of the production output is provided to the second input operation; and
the method comprises identifying that a first and second production output of a further output operation of a further producer subgraph of the plurality of base subgraphs are to be provided to a further input operation of a further consumer subgraph of the plurality of base subgraphs and, in response, ceasing chaining of the further consumer subgraph to an end of the further producer subgraph.

9. The method of claim 7 or claim 8, wherein the chaining comprises mapping the output operation of the producer subgraph and the input operation of the consumer subgraph from the chain of base subgraphs to a logical pipe for the producer subgraph to output data to and for the consumer subgraph to receive data from.

10. The method of claim 9, comprising generating forwarding pipe configuration data indicating that the logical pipe is a logical forwarding pipe for forwarding data generated by a set of operations of the chain of base subgraphs that are to be grouped together for execution, the set of operations comprising at least one operation of the producer subgraph.

11. The method of any one of claims 1 to 10, wherein the merging comprises merging the consumer subgraph space and the producer subgraph space such that each dimension of the consumer subgraph space uniquely maps to a corresponding dimension of the producer subgraph space.

12. The method of any one of claims 1 to 11, comprising adjusting the chain of base subgraphs to at least one of:
remove at least one redundant aspect;
consolidate at least two duplicate portions of the chain of base subgraphs; and
combine at least two dimensions of the chain space that are non-orthogonal to each other in the chain space.

13. The method of any one of claims 1 to 12, wherein the task data is task data for a graph processor operable to execute the further directed graph of operations.

14. The method of claim 13, wherein the graph processor comprises a neural engine and/or a neural processing unit.

15. A system comprising a processor configured to perform the method of any one of claims 1 to 14, and an offload processor, the offload processor comprising a command processing unit connected to a processing module, the processing module comprising:
a storage with a plurality of storage elements; and
a plurality of execution units,
wherein the processor is configured to issue the task data to the command processing unit.

16. The system of claim 15, wherein the processor is configured to compile the task data into machine instructions.

17. A non-transitory computer-readable storage medium comprising a set of computer-readable instructions stored thereon which, when executed by at least one processor, are arranged to cause the at least one processor to perform the method of any one of claims 1 to 14.

## Amended claims

### Amended claims in accordance with Rule 137(2) EPC.

1. A computer-implemented method of generating machine instructions for execution by a processor, the method comprising:
obtaining graph data representing a directed graph of operations;
obtaining a plurality of base subgraphs based on the graph data, wherein each base subgraph of the plurality of base subgraphs comprises at least one operation of the directed graph of operations and is associated with a respective subgraph space defined by at least one dimension to be iterated over to execute the respective base subgraph, the plurality of base subgraphs comprising:
a producer subgraph comprising a producer operation of the directed graph of operations, for generation of an output; and
a consumer subgraph comprising a consumer operation of the directed graph of operations, for consumption of the output;
chaining the consumer subgraph to an end of the producer subgraph to generate a chain of base subgraphs, wherein the chaining comprises merging a consumer subgraph space associated with the consumer subgraph with a producer subgraph space associated with the producer subgraph to obtain a chain space associated with the chain of base subgraphs;
generating task data that describes a task to be executed in the form of a further directed graph of operations representative of at least part of the directed graph of operations and comprising a chain of operations based on the chain of base subgraphs; and
compiling the task data into machine instructions, thereby generating the machine instructions for execution by the processor.

2. The method of claim 1, wherein the chain space has a chain space dimensionality corresponding to a sum of a first dimensionality of the consumer subgraph space and a second dimensionality of the producer subgraph space.

3. The method of claim 1 or claim 2, wherein the chain space is defined by a multi-dimensional nested loop of a plurality of dimensions to be iterated over to execute the chain of base subgraphs, the plurality of dimensions comprising at least one inner dimension and at least one outer dimension, outwards of the at least one dimension within the multi-dimensional nested loop, wherein the at least one inner dimension defines the producer subgraph space and the at least one outer dimension defines the consumer subgraph space.

4. The method of any one of claims 1 to 3, wherein the chain comprises at least one of: plurality of a particular operation of the directed graph of operations and a plurality of a particular base subgraph of the plurality of base subgraphs and/or wherein the chain comprises a plurality of convolution operations.

5. The method of any one of claims 1 to 4, wherein at least one base subgraph of the plurality of base subgraphs comprises a directed cycle.

6. The method of any one of claims 1 to 5, wherein the plurality of base subgraphs are associated with transform data defining, for each respective base subgraph of the plurality of base subgraphs, a transform between the subgraph space for the respective base subgraph and at least one operation-specific local space of the at least one operation of the respective base subgraph.

7. The method of any one of claims 1 to 6, wherein each respective base subgraph of the plurality of base subgraphs begins with an input operation, ends with an output operation and comprises at least one operation of the directed graph of operations between the input operation and the output operation.

8. The method of claim 7, wherein at least one of:
the input operation is for obtaining an input from external storage and/or the output operation is for writing an output to the external storage and/or a further external storage;
the method comprises, prior to the merging, identifying that a production output of the output operation of the producer subgraph is to be provided to a first input operation of the consumer subgraph and a second input operation of the consumer subgraph, wherein the merging comprises: generating a duplicate of the output operation, associated with a duplicate of the production output; and merging the producer and consumer subgraphs such that the production output is provided to the first input operation and the duplicate of the production output is provided to the second input operation; and
the method comprises identifying that a first and second production output of a further output operation of a further producer subgraph of the plurality of base subgraphs are to be provided to a further input operation of a further consumer subgraph of the plurality of base subgraphs and, in response, ceasing chaining of the further consumer subgraph to an end of the further producer subgraph.

9. The method of claim 7 or claim 8, wherein the chaining comprises mapping the output operation of the producer subgraph and the input operation of the consumer subgraph from the chain of base subgraphs to a logical pipe for the producer subgraph to output data to and for the consumer subgraph to receive data from.

10. The method of claim 9, comprising generating forwarding pipe configuration data indicating that the logical pipe is a logical forwarding pipe for forwarding data generated by a set of operations of the chain of base subgraphs that are to be grouped together for execution, the set of operations comprising at least one operation of the producer subgraph.

11. The method of claim 10, comprising mapping each of the set of the operations to the same execution unit of the processor.

12. The method of any one of claims 1 to 11, wherein the merging comprises merging the consumer subgraph space and the producer subgraph space such that each dimension of the consumer subgraph space uniquely maps to a corresponding dimension of the producer subgraph space.

13. The method of any one of claims 1 to 12, comprising adjusting the chain of base subgraphs to at least one of:
remove at least one redundant aspect;
consolidate at least two duplicate portions of the chain of base subgraphs; and
combine at least two dimensions of the chain space that are non-orthogonal to each other in the chain space.

14. The method of any one of claims 1 to 13, wherein the processor is a graph processor operable to execute the further directed graph of operations.

15. The method of claim 14, wherein the graph processor comprises a neural engine and/or a neural processing unit.

16. A system comprising a processor configured to perform the method of any one of claims 1 to 15, and an offload processor, the offload processor comprising a command processing unit connected to a processing module, the processing module comprising:
a storage with a plurality of storage elements; and
a plurality of execution units,
wherein the processor is configured to issue the task data to the command processing unit.

17. A non-transitory computer-readable storage medium comprising a set of computer-readable instructions stored thereon which, when executed by at least one processor, are arranged to cause the at least one processor to perform the method of any one of claims 1 to 15.
